# EUROPEAN PATENT APPLICATION

(11) **EP 4 847 450 A1**
(43) Date of publication of application: **02.12.2026**
(21) Application number: 24919617.1
(22) Date of filing: 27.05.2024
(51) Int. Cl.: C01B 39/48, B01J 20/16, B01J 29/70, B82Y 30/00, B82Y 40/00

(54) **SCM-53 MOLECULAR SIEVE, PREPARATION METHOD THEREFOR, AND USE THEREOF**

(30) Priority: 24.01.2024 CN 202410100514; 03.04.2024 CN 202410402925
(71) Applicant: China Petroleum & Chemical Corporation, Beijing 100728 (CN); Sinopec (Shanghai) Research Institute of Petrochemical Technology Co., Ltd., Shanghai 201208 (CN)
(72) Inventor: YANG, Weimin, Shanghai 201208 (CN); LUO, Yi, Shanghai 201208 (CN); LI, Rui, Shanghai 201208 (CN); HE, Xinyue, Shanghai 201208 (CN); DENG, Yuwei, Shanghai 201208 (CN)
(74) Representative: Hoffmann Eitle
(86) International application number: PCT/CN2024/095420
(87) International publication number: WO 2025/156531

(57) **Abstract**

The present invention relates to a SCM-53 molecular sieve, the preparation method and application thereof. The X-ray diffraction pattern of the SCM-53 molecular sieve provided by the present invention includes a diffraction peak at 2θ of 4.292°±0.40°, and optionally further includes one or more of diffraction peaks at 2θ of 8.805°±0.50°, 12.119°±0.40° and 26.036°±0.40°. The SCM-53 molecular sieve involved in the present invention has a novel framework structure and/or chemical composition, and has a very important application value.

## Description

### TECHNICAL FIELD

The present invention relates to the field of molecular sieves, specifically to an SCM-53 molecular sieve, a preparation method and application thereof.

### BACKGROUND TECHNOLOGY

Zeolite molecular sieves are a class of inorganic crystalline microporous materials having a three-dimensional, four-connected framework structure formed by the primary structural unit TO₄ ([SiO₄], [AlO₄] or [PO₄]) tetrahedral through shared vertices. TO₄ tetrahedra are linked via oxygen bridges to form diverse secondary structures which form chain-like structures and structural building units according to different linking manners and at last construct different topological structures of zeolite molecular sieves.

The specific structure of the zeolite molecular sieve material has a specific powder X-ray diffraction (XRD) pattern. The position, the relative intensity and the width of the peaks in the powder XRD pattern are related to the chemical composition, the grain size and the shape of the substance. Various zeolite molecular sieves with the same topological structure may have different unit cell parameters, and their powder XRD patterns may be slightly different.

Meanwhile, the zeolite molecular sieves with the same topological structure generally have the same powder XRD pattern characteristics, but can be classified and named as different zeolite molecular sieve materials due to different chemical compositions. A typical example is the zeolite molecular sieve materials ZSM-5 and TS-1 with the same MFI topological structure; the two materials have the same powder XRD pattern characteristics but different chemical compositions of the framework structure, and are two different zeolite molecular sieve materials. The framework structure of the ZSM-5 zeolite molecular sieve material consists of Si, Al and O elements, and it is mainly used in the field of acid catalysis, while the framework structure of the TS-1 zeolite molecular sieve material consists of Si, Ti and O elements, and it is mainly used for the catalytic oxidation process.

Zeolite molecular sieves have a good hydrothermal stability, an adjustable pore diameter and pore shape, and a variable pore chemical composition. These characteristics make the zeolite molecular sieve materials widely used in the fields of adsorption, separation, catalysis, microelectronics, medical diagnosis and the like. Therefore, the synthesis of molecular sieves with special framework structures has always been one of the most important research directions in the field of molecular sieves.

### CONTENTS OF THE INVENTION

The present invention provides a novel aluminosilicate molecular sieve SCM-53, which is a germanium-free, high-silica molecular sieve material with a quite important application value.

Specifically, the present invention provides an aluminosilicate SCM-53 molecular sieve, characterized in that an X-ray diffraction pattern of the SCM-53 molecular sieve includes a diffraction peak at 2θ of 4.292°±0.40°, and optionally further includes one or more of diffraction peaks at 2θ of 8.805°±0.50°, 12.119°±0.40° and 26.036°±0.40°.

In some embodiments, the X-ray diffraction pattern of the SCM-53 molecular sieve further includes one or more of diffraction peaks at 2θ of 14.322°±0.50°, 18.385°±0.540° and 22.998°±0.40°.

In some embodiments, in the SCM-53 molecular sieve,
the intensity of the diffraction peak at 2θ of 4.292°±0.40° and/or 26.036°±0.40° is stronger than the intensity of the diffraction peak at 2θ of 8.805°±0.50° and/or 12.119°±0.40°; and/or
the intensity of the diffraction peak at 2θ of 4.292°±0.40° is stronger than the intensity of the diffraction peak at 2θ of 26.036°±0.40°, or the intensity of the diffraction peak at 2θ of 4.292°±0.40° is weaker than the intensity of the diffraction peak at 2θ of 26.036°±0.40°; and/or
the diffraction peak at 2θ of 4.292°±0.40° or 26.036°±0.40° is the strongest peak.

In some embodiments, the X-ray diffraction pattern of the SCM-53 molecular sieve includes (i) a diffraction peak at 2θ of 4.363°±0.30°, optionally further including one or more of diffraction peaks at 2θ of 8.940°±0.30°, 12.08°±0.30° and 26.09°±0.30°, or (ii) a diffraction peak at 2θ of 4.221°±0.30°, optionally further including one or more of diffraction peaks at 2θ of 8.669°±0.30°, 12.158°±0.30° and 25.982°±0.30°. In further some embodiments, the X-ray diffraction pattern of the SCM-53 molecular sieve further includes, in the case of (i), one or more of diffraction peaks at 2θ of 14.48°±0.30°, 18.42°±0.50° and 23.05°±0.30°, or further includes, in the case of (ii), one or more of diffraction peaks at 2θ of 14.164°±0.30°, 18.35°±0.50°, 22.946°±0.30° and 24.019°±0.50°.

In some embodiments, in the SCM-53 molecular sieve,
the intensity of the diffraction peak at 2θ of 4.363°±0.30° and/or 26.09°±0.30° is stronger than the intensity of the diffraction peak at 2θ of 8.940°±0.30° and/or 12.08°±0.30°, or the intensity of the diffraction peak at 2θ of 4.221°±0.30° and/or 25.982°±0.30° is stronger than the intensity of the diffraction peak at 2θ of 8.669°±0.30° and/or 12.158°±0.30°; and/or
the intensity of the diffraction peak at 2θ of 4.363°±0.30° is stronger than the intensity of the diffraction peak at 2θ of 26.09°±0.30°, or the intensity of the diffraction peak at 2θ of 4.363°±0.30° is weaker than the intensity of the diffraction peak at 2θ of 26.09°±0.30°, or the intensity of the diffraction peak at 2θ of 4.221°±0.30° is stronger than the intensity of the diffraction peak at 2θ of 25.982°±0.30°, or the intensity of the diffraction peak at 2θ of 4.221°±0.30° is weaker than the intensity of the diffraction peak at 2θ of 25.982°±0.30°; and/or
the diffraction peak at 2θ of 4.363°±0.30° or 26.09°±0.30° is the strongest peak, or the diffraction peak at 2θ of 4.221°±0.30° or 25.982°±0.30° is the strongest peak.

In some embodiments, the X-ray diffraction pattern of the SCM-53 molecular sieve includes the diffraction peaks shown in Table A or Table A':

**Table A**

| 2θ | Relative Intensity (I/I₀×100) |
|---|---|
| 4.363°±0.30° | s-vs |
| 8.940°±0.30° | m-s |
| 12.08°±0.30° | m-s |
| 26.09°±0.30° | vs |

**Table A'**

| 2θ | Relative Intensity (I/I₀×100) |
|---|---|
| 4.221°±0.30° | vs |
| 8.669°±0.30° | m-s |
| 12.158°±0.30° | m-s |
| 25.982°±0.30° | s-vs |

Preferably, the X-ray diffraction pattern of the SCM-53 molecular sieve includes the diffraction peaks shown in Table B or Table B':

**Table B**

| 2θ | Relative Intensity (I/I₀×100) |
|---|---|
| 4.363°±0.30° | s-vs |
| 8.940°±0.30° | m-s |
| 12.08°±0.30° | m-s |
| 14.48°±0.30° | m-s |
| 18.42°±0.50° | w-m |
| 23.05°±0.30° | w-m |
| 26.09°±0.30° | vs |

**Table B'**

| 2θ | Relative Intensity (I/I₀×100) |
|---|---|
| 4.221°±0.30° | vs |
| 8.669°±0.30° | m-s |
| 12.158°±0.30° | m-s |
| 14.164°±0.30° | m-s |
| 18.35°±0.50° | w-m |
| 22.946°±0.30° | w-m |
| 24.019°±0.50° | m-s |
| 25.982°±0.30° | s-vs |

In some embodiments, the X-ray diffraction pattern of the SCM-53 molecular sieve includes the diffraction peaks shown in Table C or Table C':

**Table C**

| 2θ | d-spacing (Å)^{(b)} | Relative Intensity (I/I₀×100) |
|---|---|---|
| 4.363°±0.30° | 20.237 | s-vs |
| 8.940°±0.30° | 9.884 | m-s |
| 12.08°±0.30° | 7.320 | m-s |
| 26.09°±0.30° | 3.413 | vs |

wherein b: varies with 2θ.

**Table C'**

| 2θ | d-spacing (Å)^{(b)} | Relative Intensity (I/I₀×100) |
|---|---|---|
| 4.221°±0.30° | 20.916 | vs |
| 8.669°±0.30° | 10.192 | m-s |
| 12.158°±0.30° | 7.2738 | m-s |
| 25.982°±0.30° | 3.4266 | s-vs |

wherein b: varies with 2θ.

Preferably, the X-ray diffraction pattern of the SCM-53 molecular sieve includes the diffraction peaks shown in Table D or Table D':

**Table D**

| 2θ | d-spacing (Å)^{(b)} | Relative Intensity (I/I₀×100) |
|---|---|---|
| 4.363°±0.30° | 20.237 | s-vs |
| 8.940°±0.30° | 9.884 | m-s |
| 12.08°±0.30° | 7.320 | m-s |
| 14.48°±0.30° | 6.113 | m-s |
| 18.42°±0.50° | 4.813 | w-m |
| 23.05°±0.30° | 3.855 | w-m |
| 26.09°±0.30° | 3.413 | vs |

wherein b: varies with 2θ.

**Table D'**

| 2θ | d-spacing (Å)^{(b)} | Relative Intensity (I/I₀×100) |
|---|---|---|
| 4.221°±0.30° | 20.916 | vs |
| 8.669°±0.30° | 10.192 | m-s |
| 12.158°±0.30° | 7.2738 | m-s |
| 14.164°±0.30° | 6.2478 | m-s |
| 18.35°±0.50° | 4.8308 | w-m |
| 22.946°±0.30° | 4.1399 | w-m |
| 24.019°±0.50° | 3.7019 | m-s |
| 25.982°±0.30° | 3.4266 | s-vs |

wherein b: varies with 2θ.

In some embodiments: the SCM-53 molecular sieve includes silicon, aluminum and oxygen; and/or
in the SCM-53 molecular sieve, the molar ratio of silica to alumina is 10-400, preferably 15-350;
more preferably, the SCM-53 molecular sieve has a chemical composition of mSiO₂·Al₂O₃ with a molar ratio where 10≤m≤400, preferably 15≤m≤350, more preferably 20≤m≤300; and/or
crystals of the SCM-53 molecular sieve have a nanosheet morphology, and the average thickness of the crystals is less than or equal to 19 nm, preferably 3 nm-18 nm, more preferably 5 nm-16 nm, or the average thickness of the crystals is less than or equal to 30 nm, preferably 2 nm-27 nm, more preferably 5 nm-25 nm;
preferably, in the SCM-53 molecular sieve, the crystals with a thickness of less than or equal to 16 nm account for at least 70% of the total number of crystals; and/or
the specific surface area of the SCM-53 molecular sieve is 100 m²/g-500 m²/g, preferably 200 m²/g-400 m²/g or 300 m²/g-450 m²/g; and/or
the pore volume of the SCM-53 molecular sieve is 0.015 cm³/g-1.0 cm³/g, preferably 0.05 cm³/g-0.75 cm³/g; and/or
the SCM-53 molecular sieve is germanium-free.

In some embodiments, the SCM-53 molecular sieve further includes one or more elements selected from sodium, potassium, germanium, titanium, boron, zirconium, tin and iron; and/or
the framework topological structure of the SCM-53 molecular sieve contains natural tillings of [4²▪5⁴▪10⁴], [5²▪6▪10²], [4▪5⁴▪6⁵▪7⁴] and [6▪7²]; and/or
the composition of the natural tillings of the framework topological structure of the SCM-53 molecular sieve includes one [4²▪5⁴▪10⁴], two [5²▪6▪10²], two [4▪5⁴▪6⁵▪7⁴] and four [6▪7²]; and/or
the SCM-53 molecular sieve includes a two-dimensional 10×10-membered ring pore system; and/or
the SCM-53 molecular sieve has one or more of 4-membered ring, 5-membered ring, 6-membered ring, 7-membered ring and 10-membered ring; and/or
the SCM-53 molecular sieve belongs to a monoclinic crystal system;
preferably, the unit cell parameters of the monoclinic crystal system of the SCM-53 molecular sieve include a = 8.0 Å-11.5 Å, preferably a = 8.5 Å-11.0 Å, more preferably a = 9.0 Å-10.5 Å;
preferably, the unit cell parameters of the monoclinic crystal system of the SCM-53 molecular sieve include b = 8.0 Å-11.5 Å, preferably b = 8.5 Å-11.0 Å, more preferably b = 9.0 Å-11.0 Å;
preferably, the unit cell parameters of the monoclinic crystal system of the SCM-53 molecular sieve include c = 18.0 Å-22.0 Å, preferably c = 18.5 Å-21.5 Å, more preferably c = 19.0 Å-21.0 Å;
preferably, the unit cell parameters of the monoclinic crystal system of the SCM-53 molecular sieve include α = 90°, γ = 90°;
preferably, the unit cell parameter of the monoclinic crystal system of the SCM-53 molecular sieve is β = 100°-125°, preferably β = 105°-115°.

The present invention further provides a method for preparing a SCM-53 molecular sieve, in particular the above SCM-53 molecular sieve, comprising steps of:
S1: subjecting a mixture containing a silicon source, an aluminum source, an organic structure-directing agent and a solvent to a crystallization treatment to obtain a crystallized solid product;
S2: mixing the crystallized solid product with a silanizing agent under an acidic condition, and then subjecting the mixture to a hydrothermal treatment to obtain a hydrothermally treated solid product;
S3: drying and calcining the hydrothermally treated solid product.

In some embodiments, the molar ratio of the silicon source calculated as SiO₂ to the aluminum source calculated as Al₂O₃ is 1:(0.0025-0.25), preferably 1:(0.0025-0.2), more preferably 1:(0.0025-0.1) or 1:(0.05-0.2), preferably 1:(0.0025-0.08), more preferably 1:(0.005-0.05); and/or
the molar ratio of the silicon source to the organic structure-directing agent is 1:(0.10-0.50), preferably 1:(0.20-0.50), more preferably 1:(0.30-0.50); and/or
the molar ratio of the silicon source to the solvent is 1:(8-100), preferably 1:(15-100), more preferably 1:(15-50); and/or
the acidic condition is provided by an acid solution; preferably, the concentration of the acid solution is 0.5 mol/L-6 mol/L, preferably 1 mol/L-5 mol/L, more preferably 1.5 mol/L-4.5 mol/L, wherein the acid solution is preferably selected from aqueous or ethanol solutions of hydrochloric acid, acetic acid or nitric acid;
preferably, the liquid-solid ratio of the acid solution to the crystallized product is (10-100) mL:1 g, preferably (20-80) mL:1 g, more preferably (40-60) mL:1 g; and/or
the mass ratio of the silanizing agent to the crystallized product is (0.1-4):1, preferably (0.2-2.5):1, more preferably (0.2-2):1.

In some embodiments, the organic structure-directing agent includes a compound represented by Formula I: 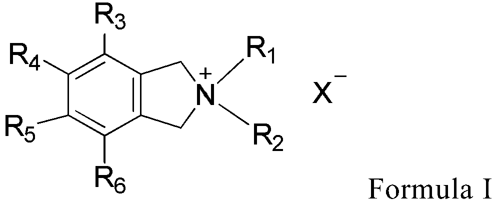
in Formula I, R₁ and R₂ are identical or different and each independently selected from C₁₋₈ alkyl, preferably C₁₋₄ alkyl, more preferably methyl, ethyl or propyl; X⁻ is selected from OH⁻, halogen anions, carbonate, nitrate or monovalent organic acid radicals; R₃, R₄, R₅ and R₆ are identical or different and each independently selected from hydrogen, halogen, C₁₋₄ alkyl, preferably hydrogen, fluorine, chlorine, bromine, methyl, ethyl or propyl;
preferably, the organic structure-directing agent of Formula I is selected from one or more of 2,2-dimethyl-1,3-dihydroisoindolium hydroxide, 2,2-dimethyl-1,3-dihydroisoindolium bromide and 2,2-dimethyl-1,3-dihydroisoindolium chloride; and/or
the organic structure-directing agent includes a compound represented by Formula I': 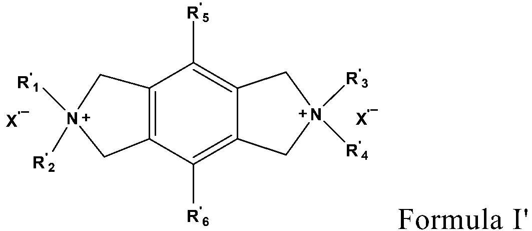
in Formula I', R'₁, R'₂, R'₃ and R'₄ are identical or different and each independently selected from C₁₋₈ alkyl, preferably C₁₋₄ alkyl, more preferably methyl, ethyl or propyl; X'⁻ is selected from OH⁻, halogen anions, carbonate, nitrate or monovalent organic acid radicals; R'₅ and R'₆ are identical or different and each independently selected from hydrogen, halogen, C₁₋₄ alkyl, preferably hydrogen, fluorine, chlorine, bromine, methyl, ethyl or propyl;
preferably, the organic structure-directing agent of Formula I' is selected from one or more of 2,2,6,6-tetramethyl-1,2,3,5,6,7-hexahydropyrrolo[3,4-*f*]isoindolium hydroxide, 2,2,6,6-tetramethyl-1,2,3,5,6,7-hexahydropyrrolo[3,4-*f*]isoindolium bromide and 2,2,6,6-tetramethyl-1,2,3,5,6,7-hexahydropyrrolo[3,4-*f*]isoindolium chloride.

In some embodiments, the silanizing agent includes a compound represented by Formula II: 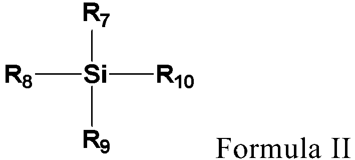 in Formula II, R₇, R₈, R₉ and R₁₀ are identical or different and each independently selected from hydrogen, halogen, C₁₋₆ alkyl, C₁₋₆ alkoxy, preferably hydrogen, fluorine, chlorine, bromine, methyl, ethyl, propyl, methoxy, ethoxy, propoxy; preferably, R₇, R₈, R₉ and R₁₀ are identical and all selected from C₁₋₄ alkoxy; preferably, the silanizing agent is selected from one or more of tetramethoxysilane, tetraethoxysilane, tetrapropoxysilane, tetraisopropoxysilane, monomethylchlorosilane, dimethylchlorosilane, monomethylmethoxysilane, dimethylmethoxysilane, monomethylethoxysilane and dimethylethoxysilane.

In some embodiments, the crystallization treatment of the mixture is a dynamic crystallization with rotation or stirring, with a rotation speed of 10 rpm-60 rpm and a stirring speed of 30 rpm-400 rpm; the crystallization conditions of the mixture are a crystallization at 130°C-180°C for 1-12 days, preferably at 135°C-175°C for 2-11 days, more preferably at 140°C-170°C for 3-10 days; and/or
the temperature of the hydrothermal treatment is 80°C-190°C; and/or
the time of the hydrothermal treatment is 5 h-48 h; and/or
the calcination temperature is 400°C-800°C, preferably 500°C-700°C; and/or
the calcination time is 2 h-10 h, preferably 3 h-9 h; and/or
the silicon source is selected from one or more of silica sol, silica gel, tetraethyl orthosilicate, white carbon black and silicic acid; and/or
the aluminum source is selected from one or more of aluminum hydroxide, aluminum isopropoxide, aluminum nitrate and aluminum oxide; and/or
the solvent is selected from water; and/or
the mixture contains no alkali metal or alkaline earth metal.

The technical solutions of the present invention are described in more detail from six aspects below.

In the first aspect, the present invention provides an SCM-53 molecular sieve whose X-ray diffraction pattern includes one or more of diffraction peaks at 2θ of 4.363°±0.30°, 8.940°±0.30°, 12.08°±0.30° and 26.09°±0.30°. In particular, the X-ray diffraction pattern of the SCM-53 molecular sieve includes a diffraction peak at 2θ of 4.363°±0.30°, and optionally further includes one or more of diffraction peaks at 2θ of 8.940°±0.30°, 12.08°±0.30° and 26.09°±0.30°.

In some embodiments, the X-ray diffraction pattern of the SCM-53 molecular sieve includes a diffraction peak at 2θ of 4.363°±0.03°, 4.363°±0.05°, 4.363°±0.07°, 4.363°±0.1°, 4.363°±0.13°, 4.363°±0.15°, 4.363°±0.17°, 4.363°±0.2°, 4.363°±0.23°, 4.363°±0.25° or 4.363°±0.27°.

In some embodiments, the X-ray diffraction pattern of the SCM-53 molecular sieve includes a diffraction peak at 2θ of 8.940°±0.03°, 8.940°±0.05°, 8.940°±0.07°, 8.940°±0.1°, 8.940°±0.13°, 8.940°±0.15°, 8.940°±0.17°, 8.940°±0.2°, 8.940°±0.23°, 8.940°±0.25° or 8.940°±0.27°.

In some embodiments, the X-ray diffraction pattern of the SCM-53 molecular sieve includes a diffraction peak at 2θ of 12.08°±0.03°, 12.08°±0.05°, 12.08°±0.07°, 12.08°±0.1°, 12.08°±0.13°, 12.08°±0.15°, 12.08°±0.17°, 12.08°±0.2°, 12.08°±0.23°, 12.08°±0.25° or 12.08°±0.27°.

In some embodiments, the X-ray diffraction pattern of the SCM-53 molecular sieve includes a diffraction peak at 2θ of 26.09°±0.03°, 26.09°±0.05°, 26.09°±0.07°, 26.09°±0.1°, 26.09°±0.13°, 26.09°±0.15°, 26.09°±0.17°, 26.09°±0.2°, 26.09°±0.23°, 26.09°±0.25° or 26.09°±0.27°.

In some embodiments, the intensity of the diffraction peak at 2θ of 4.363°±0.30° and/or 26.09°±0.30° is stronger than the intensity of the diffraction peak at 2θ of 8.940°±0.30° and/or 12.08°±0.30°.

In some embodiments, the intensity of the diffraction peak at 2θ of 4.363°±0.30° is stronger than the intensity of the diffraction peak at 2θ of 26.09°±0.30°.

In some embodiments, the intensity of the diffraction peak at 2θ of 4.363°±0.30° is weaker than the intensity of the diffraction peak at 2θ of 26.09°±0.30°.

In some embodiments, in the X-ray diffraction pattern of the SCM-53 molecular sieve, the diffraction peak at 2θ of 4.363°±0.30° is the strongest peak.

In some embodiments, in the X-ray diffraction pattern of the SCM-53 molecular sieve, the diffraction peak at 2θ of 26.09°±0.30° is the strongest peak.

In some embodiments, the X-ray diffraction pattern of the SCM-53 molecular sieve further includes one or more of diffraction peaks at 2θ of 14.48°±0.30°, 18.42°±0.50° and 23.05°±0.30°.

In some embodiments, the X-ray diffraction pattern of the SCM-53 molecular sieve further includes a diffraction peak at 2θ of 14.48°±0.03°, 14.48°±0.05°, 14.48°±0.07°, 14.48°±0.1°, 14.48°±0.13°, 14.48°±0.15°, 14.48°±0.17°, 14.48°±0.2°, 14.48°±0.23°, 14.48°±0.25° or 14.48°±0.27°.

In some embodiments, the X-ray diffraction pattern of the SCM-53 molecular sieve further includes a diffraction peak at 2θ of 18.42°±0.03°, 18.42°±0.05°, 18.42°±0.07°, 18.42°±0.1°, 18.42°±0.13°, 18.42°±0.15°, 18.42°±0.17°, 18.42°±0.2°, 18.42°±0.23°, 18.42°±0.25°, 18.42°±0.27°, 18.42°±0.3°, 18.42°±0.33°, 18.42°±0.35°, 18.42°±0.37°, 18.42°±0.4°, 18.42°±0.43°, 18.42°±0.45° or 18.42°±0.47°.

In some embodiments, the X-ray diffraction pattern of the SCM-53 molecular sieve further includes a diffraction peak at 2θ of 23.05°±0.03°, 23.05°±0.05°, 23.05°±0.07°, 23.05°±0.1°, 23.05°±0.13°, 23.05°±0.15°, 23.05°±0.17°, 23.05°±0.2°, 23.05°±0.23°, 23.05°±0.25° or 23.05°±0.27°.

In some embodiments, the X-ray diffraction pattern of the SCM-53 molecular sieve includes the diffraction peaks shown in Table A:

**Table A**

| 2θ | Relative Intensity (I/I₀×100) |
|---|---|
| 4.363°±0.30° | s-vs |
| 8.940°±0.30° | m-s |
| 12.08°±0.30° | m-s |
| 26.09°±0.30° | vs |

In some embodiments, the X-ray diffraction pattern of the SCM-53 molecular sieve includes the diffraction peaks shown in Table A-1:

**Table A-1**

| 2θ | Relative Intensity (I/I₀×100) |
|---|---|
| 4.363°±0.30° | vs |
| 8.940°±0.30° | m-s |
| 12.08°±0.30° | m-s |
| 26.09°±0.30° | s-vs |

In some embodiments, the X-ray diffraction pattern of the SCM-53 molecular sieve includes the diffraction peaks shown in Table A-2:

**Table A-2**

| 2θ | Relative Intensity (I/I₀×100) |
|---|---|
| 4.363°±0.30° | 95-100 |
| 8.940°±0.30° | 35-55 |
| 12.08°±0.30° | 35-50 |
| 26.09°±0.30° | 90-100 |

In some embodiments, the X-ray diffraction pattern of the SCM-53 molecular sieve includes the diffraction peaks shown in Table B:

**Table B**

| 2θ | Relative Intensity (I/I₀×100) |
|---|---|
| 4.363°±0.30° | s-vs |
| 8.940°±0.30° | m-s |
| 12.08°±0.30° | m-s |
| 14.48°±0.30° | m-s |
| 18.42°±0.50° | w-m |
| 23.05°±0.30° | w-m |
| 26.09°±0.30° | vs |

In some embodiments, the X-ray diffraction pattern of the SCM-53 molecular sieve includes the diffraction peaks shown in Table B-1:

**Table B-1**

| 2θ | Relative Intensity (I/I₀×100) |
|---|---|
| 4.363°±0.30° | Vs |
| 8.940°±0.30° | m-s |
| 12.08°±0.30° | m-s |
| 14.48°±0.30° | m-s |
| 18.42°±0.50° | w-m |
| 23.05°±0.30° | w-m |
| 26.09°±0.30° | s-vs |

In some embodiments, the X-ray diffraction pattern of the SCM-53 molecular sieve includes the diffraction peaks shown in Table B-2:

**Table B-2**

| 2θ | Relative Intensity (I/I₀×100) |
|---|---|
| 4.363°±0.30° | 95-100 |
| 8.940°±0.30° | 35-55 |
| 12.08°±0.30° | 35-50 |
| 14.48°±0.30° | 30-45 |
| 18.42°±0.50° | 20-35 |
| 23.05°±0.30° | 20-35 |
| 26.09°±0.30° | 90-100 |

In some embodiments, the X-ray diffraction pattern of the SCM-53 molecular sieve includes the diffraction peaks shown in Table C:

**Table C**

| 2θ | d-spacing (Å)^{(b)} | Relative Intensity (I/I₀×100) |
|---|---|---|
| 4.363°±0.30° | 20.237 | s-vs |
| 8.940°±0.30° | 9.884 | m-s |
| 12.08°±0.30° | 7.320 | m-s |
| 26.09°±0.30° | 3.413 | vs |

wherein b: varies with 2θ.

In some embodiments, the X-ray diffraction pattern of the SCM-53 molecular sieve includes the diffraction peaks shown in Table C-1:

**Table C-1**

| 2θ | d-spacing (Å)^{(b)} | Relative Intensity (I/I₀×100) |
|---|---|---|
| 4.363°±0.30° | 20.237 | vs |
| 8.940°±0.30° | 9.884 | m-s |
| 12.08°±0.30° | 7.320 | m-s |
| 26.09°±0.30° | 3.413 | s-vs |

wherein b: varies with 2θ.

In some embodiments, the X-ray diffraction pattern of the SCM-53 molecular sieve includes the diffraction peaks shown in Table C-2:

**Table C-2**

| 2θ | d-spacing (Å)^{(b)} | Relative Intensity (I/I₀×100) |
|---|---|---|
| 4.363°±0.30° | 20.237 | 95-100 |
| 8.940°±0.30° | 9.884 | 35-55 |
| 12.08°±0.30° | 7.320 | 35-50 |
| 26.09°±0.30° | 3.413 | 90-100 |

wherein b: varies with 2θ.

In some embodiments, the X-ray diffraction pattern of the SCM-53 molecular sieve includes the diffraction peaks shown in Table D:

**Table D**

| 2θ | d-spacing (Å)^{(b)} | Relative Intensity (I/I₀×100) |
|---|---|---|
| 4.363°±0.30° | 20.237 | s-vs |
| 8.940°±0.30° | 9.884 | m-s |
| 12.08°±0.30° | 7.320 | m-s |
| 14.48°±0.30° | 6.113 | m-s |
| 18.42°±0.50° | 4.813 | w-m |
| 23.05°±0.30° | 3.855 | w-m |
| 26.09°±0.30° | 3.413 | vs |

wherein b: varies with 2θ.

In some embodiments, the X-ray diffraction pattern of the SCM-53 molecular sieve includes the diffraction peaks shown in Table D-1:

**Table D-1**

| 2θ | d-spacing (Å)^{(b)} | Relative Intensity (I/I₀×100) |
|---|---|---|
| 4.363°±0.30° | 20.237 | vs |
| 8.940°±0.30° | 9.884 | m-s |
| 12.08°±0.30° | 7.320 | m-s |
| 14.48°±0.30° | 6.113 | m-s |
| 18.42°±0.50° | 4.813 | w-m |
| 23.05°±0.30° | 3.855 | w-m |
| 26.09°±0.30° | 3.413 | s-vs |

wherein b: varies with 2θ.

In some embodiments, the X-ray diffraction pattern of the SCM-53 molecular sieve includes the diffraction peaks shown in Table D-2:

**Table D-2**

| 2θ | d-spacing (Å)^{(b)} | Relative Intensity (I/I₀×100) |
|---|---|---|
| 4.363°±0.30° | 20.237 | 95-100 |
| 8.940°±0.30° | 9.884 | 35-55 |
| 12.08°±0.30° | 7.320 | 35-50 |
| 14.48°±0.30° | 6.113 | 30-45 |
| 18.42°±0.50° | 4.813 | 20-35 |
| 23.05°±0.30° | 3.855 | 20-35 |
| 26.09°±0.30° | 3.413 | 90-100 |

wherein b: varies with 2θ.

In some embodiments, the framework topological structure of the SCM-53 molecular sieve contains natural tillings of [4²▪5⁴▪10⁴], [5²▪6▪10²], [4▪5⁴▪6⁵▪7⁴] and [6▪7²].

In some embodiments, the composition of the natural tillings of the framework topological structure of the SCM-53 molecular sieve includes one [4²▪5⁴▪10⁴], two [5²▪6▪10²], two [4▪5⁴▪6⁵▪7⁴] and four [6▪7²]

In some embodiments, the SCM-53 molecular sieve includes a two-dimensional 10×10-membered ring pore system.

In some embodiments, the SCM-53 molecular sieve has one or more of 4-membered ring, 5-membered ring, 6-membered ring, 7-membered ring and 10-membered ring.

In some embodiments, the SCM-53 molecular sieve belongs to a monoclinic crystal system.

In some embodiments, the unit cell parameters of the monoclinic crystal system of the SCM-53 molecular sieve include a = 8.0 Å-11.5 Å, preferably a = 8.5 Å-11.0 Å, more preferably a = 9.0 Å-10.5 Å.

In some embodiments, the unit cell parameters of the monoclinic crystal system of the SCM-53 molecular sieve include b = 8.0 Å-11.5 Å, preferably b = 8.5 Å-11.0 Å, more preferably b = 9.0 Å-11.0 Å.

In some embodiments, the unit cell parameters of the monoclinic crystal system of the SCM-53 molecular sieve include c = 18.0 Å-22.0 Å, preferably c = 18.5 Å-21.5 Å, more preferably c = 19.0 Å-21.0 Å.

In some embodiments, the unit cell parameters of the monoclinic crystal system of the SCM-53 molecular sieve include α = 90°, γ = 90°.

In some embodiments, the unit cell parameter of the monoclinic crystal system of the SCM-53 molecular sieve is β = 100°-125°, preferably β = 105°-115°.

In some embodiments, the SCM-53 molecular sieve includes silicon, aluminum and oxygen.

In some embodiments, in the SCM-53 molecular sieve, the molar ratio of silica to alumina (i.e., silica-alumina ratio) is 10-400, for example, 15, 20, 25, 30, 35, 40, 45, 50, 55, 60, 65, 70, 75, 80, 85, 90, 95, 100, 105, 110, 115, 120, 125, 130, 135, 140, 145, 150, 155, 160, 165, 170, 175, 180, 185, 190, 195, 200, 205, 210, 215, 220, 225, 230, 235, 240, 245, 250, 255, 260, 265, 270, 275, 280, 285, 290, 300, 310, 320, 330, 340, 350, 360, 370, 380, 390 or any value therebetween. In some embodiments, the molar ratio of silica to alumina is 15-350.

In some embodiments, the SCM-53 molecular sieve has a chemical composition of mSiO₂·Al₂O₃ with a molar ratio where 10≤m≤400, for example, 15, 20, 25, 30, 35, 40, 45, 50, 55, 60, 65, 70, 75, 80, 85, 90, 95, 100, 105, 110, 115, 120, 125, 130, 135, 140, 145, 150, 155, 160, 165, 170, 175, 180, 185, 190, 195, 200, 205, 210, 215, 220, 225, 230, 235, 240, 245, 250, 255, 260, 265, 270, 275, 280, 285, 290, 300, 310, 320, 330, 340, 350, 360, 370, 380, 390 or any value therebetween.

In some embodiments, 15≤m≤350. In some embodiments, 20≤m≤300.

In some embodiments, crystals of the SCM-53 molecular sieve have a nanosheet morphology. In some embodiments, the average thickness of the crystals is less than or equal to 19 nm.

In some embodiments, the average thickness of the crystals is 3 nm-18 nm, for example, 4 nm, 5 nm, 6 nm, 7 nm, 8 nm, 9 nm, 10 nm, 11 nm, 12 nm, 13 nm, 14 nm, 15 nm, 16 nm, 17 nm or any value therebetween. In some embodiments, the average thickness of the crystals is 5 nm-16 nm.

In some embodiments, in the SCM-53 molecular sieve, crystals with a thickness of less than or equal to 16 nm account for at least 70% of the total number of crystals, for example, at least 75%, at least 77%, at least 80%, at least 82%, at least 84%, at least 86%, at least 90%, at least 93% or at least 95%.

In some embodiments, the specific surface area of the SCM-53 molecular sieve is 100 m²/g-500 m²/g, for example, 150 m²/g, 200 m²/g, 210 m²/g, 220 m²/g, 230 m²/g, 240 m²/g, 250 m²/g, 260 m²/g, 270 m²/g, 280 m²/g, 290 m²/g, 300 m²/g, 310 m²/g, 320 m²/g, 330 m²/g, 340 m²/g, 350 m²/g, 360 m²/g, 370 m²/g, 380 m²/g, 390 m²/g, 400 m²/g, 430 m²/g, 450 m²/g, 470 m²/g or any value therebetween. In some embodiments, the specific surface area of the SCM-53 molecular sieve is 200 m²/g-400 m²/g.

In some embodiments, the pore volume of the SCM-53 molecular sieve is 0.015 cm³/g-1.0 cm³/g, for example, 0.07 cm³/g, 0.1 cm³/g, 0.13 cm³/g, 0.15 cm³/g, 0.17 cm³/g, 0.2 cm³/g, 0.23 cm³/g, 0.25 cm³/g, 0.27 cm³/g, 0.3 cm³/g, 0.33 cm³/g, 0.35 cm³/g, 0.37 cm³/g, 0.4 cm³/g, 0.43 cm³/g, 0.45 cm³/g, 0.47 cm³/g, 0.5 cm³/g, 0.55 cm³/g, 0.6 cm³/g, 0.65 cm³/g, 0.7 cm³/g, 0.75 cm³/g, 0.8 cm³/g, 0.85 cm³/g, 0.9 cm³/g, 0.95 cm³/g or any value therebetween. In some embodiments, the pore volume of the SCM-53 molecular sieve is 0.05 cm³/g-0.75 cm³/g.

In some embodiments, the SCM-53 molecular sieve further includes elements other than silicon and aluminum, preferably one or more elements selected from sodium, potassium, germanium, titanium, boron, zirconium, tin and iron.

In some embodiments, the SCM-53 molecular sieve further includes one or more elements selected from sodium, potassium, germanium, titanium, boron, zirconium, tin and iron.

In the second aspect, the present invention provides a method for preparing an SCM-53 molecular sieve, comprising steps of:
S1: subjecting a mixture containing a silicon source, an aluminum source, an organic structure-directing agent and a solvent to a crystallization treatment to obtain a crystallized solid product;
S2: mixing the crystallized solid product with a silanizing agent under an acidic condition, and then subjecting the mixture to a hydrothermal treatment to obtain a hydrothermally treated solid product;
S3: drying and calcining the hydrothermally treated solid product;
preferably, the organic structure-directing agent includes a compound represented by Formula I: 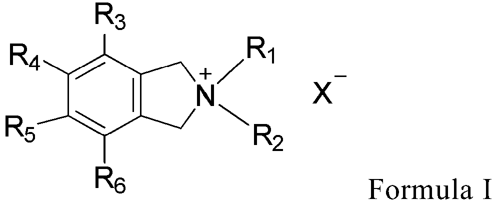 in Formula I, R₁ and R₂ are identical or different and each independently selected from C₁₋₈ alkyl; X⁻ is selected from OH⁻, halogen anions, carbonate, nitrate or monovalent organic acid radicals; R₃, R₄, R₅ and R₆ are identical or different and each independently selected from hydrogen, halogen, C₁₋₄ alkyl.

In some embodiments, in Formula I, R₁ and R₂ are identical or different and each independently selected from C₁₋₄ alkyl, for example, methyl, ethyl or propyl.

In some embodiments, X⁻ is selected from OH⁻, bromide ion, chloride ion, iodide ion, nitrate or acetate.

In some embodiments, R₃, R₄, R₅ and R₆ are identical or different and each independently selected from hydrogen, fluorine, chlorine, bromine, methyl, ethyl or propyl.

In some embodiments, at least one of R₃, R₄, R₅ and R₆ is hydrogen. In some embodiments, at least two of R₃, R₄, R₅ and R₆ are hydrogen. In some embodiments, all of R₃, R₄, R₅ and R₆ are hydrogen.

In some embodiments, the organic structure-directing agent is selected from one or more of 2,2-dimethyl-1,3-dihydroisoindolium hydroxide, 2,2-dimethyl-1,3-dihydroisoindolium bromide and 2,2-dimethyl-1,3-dihydroisoindolium chloride.

In some embodiments, the molar ratio of the silicon source calculated as SiO₂ to the aluminum source calculated as Al₂O₃ is 1:(0.0025-0.1), for example, 1:0.003, 1:0.004, 1:0.005, 1:0.006, 1:0.007, 1:0.008, 1:0.009, 1:0.0095, 1:0.01, 1:0.013, 1:0.015, 1:0.017, 1:0.02, 1:0.023, 1:0.025, 1:0.027, 1:0.03, 1:0.033, 1:0.035, 1:0.037, 1:0.04, 1:0.043, 1:0.045, 1:0.047, 1:0.05, 1:0.053, 1:0.055, 1:0.057, 1:0.06, 1:0.063, 1:0.065, 1:0.067, 1:0.07, 1:0.073, 1:0.075, 1:0.077, 1:0.08, 1:0.083, 1:0.085, 1:0.047, 1:0.09, 1:0.093, 1:0.095, 1:0.097 or any value therebetween.

In some embodiments, the molar ratio of the silicon source to the aluminum source is 1:(0.0025-0.08). In some embodiments, the molar ratio of the silicon source to the aluminum source is 1:(0.005-0.05).

In some embodiments, the molar ratio of the silicon source calculated as SiO₂ to the organic structure-directing agent is 1:(0.10-0.50), for example, 1:0.13, 1:0.15, 1:0.17, 1:0.20, 1:0.23, 1:0.25, 1:0.27, 1:0.30, 1:0.33, 1:0.35, 1:0.37, 1:0.40, 1:0.43, 1:0.45, 1:0.47 or any value therebetween.

In some embodiments, the molar ratio of the silicon source to the organic structure-directing agent is 1:(0.20-0.50). In some embodiments, the molar ratio of the silicon source to the organic structure-directing agent is 1:(0.30-0.50).

In some embodiments, the molar ratio of the silicon source calculated as SiO₂ to the solvent is 1:(8-100), for example, 1:10, 1:15, 1:20, 1:25, 1:30, 1:35, 1:40, 1:45, 1:50, 1:55, 1:60, 1:65, 1:70, 1:75, 1:80, 1:85, 1:90, 1:95 or any value therebetween.

In some embodiments, the molar ratio of the silicon source to the solvent is 1:(15-100). In some embodiments, the molar ratio of the silicon source to the solvent is 1:(15-50).

In some embodiments, the acidic condition is provided by an acid solution. In some embodiments, the concentration of the acid solution is 0.5 mol/L-6 mol/L, for example, 1 mol/L, 1.5 mol/L, 2 mol/L, 2.5 mol/L, 3 mol/L, 3.5 mol/L, 4 mol/L, 4.5 mol/L, 5 mol/L, 5.5 mol/L or any value therebetween. In some embodiments, the concentration of the acid solution is 1 mol/L-5 mol/L. In some embodiments, the concentration of the acid solution is 1.5 mol/L-4.5 mol/L.

In some embodiments, the liquid-solid ratio of the acid solution to the crystallized product is (10-100) mL:1 g, for example, 20 mL:1 g, 30 mL:1 g, 40 mL:1 g, 50 mL:1 g, 60 mL:1 g, 70 mL:1 g, 80 mL:1 g or 90 mL:1 g. In some embodiments, the liquid-solid ratio of the acid solution to the crystallized product is (20-80) mL:1 g. In some embodiments, the liquid-solid ratio of the acid solution to the crystallized product is (40-60) mL:1 g.

In some embodiments, the mass ratio of the silanizing agent to the crystallized product is (0.1-4):1, for example, 0.2:1, 0.3:1, 0.4:1, 0.5:1, 0.6:1, 0.7:1, 0.8:1, 0.9:1, 1.0:1, 1.1:1, 1.2:1, 1.3:1, 1.4:1, 1.5:1, 1.6:1, 1.7:1, 1.8:1, 1.9:1, 2.0:1, 2.3:1, 2.5:1, 2.7:1, 3.0:1, 3.3:1, 3.5:1 or 3.7:1. In some embodiments, the mass ratio of the silanizing agent to the crystallized product is (0.2-2):1.

In some embodiments, the acid solution is selected from an aqueous hydrochloric acid solution, an aqueous acetic acid solution, an aqueous nitric acid solution, an ethanol hydrochloric acid solution, an ethanol acetic acid solution or an ethanol nitric acid solution.

In some embodiments, the silanizing agent includes a compound represented by Formula II: 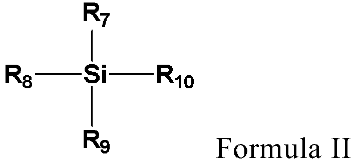 in Formula II, R₇, R₈, R₉ and R₁₀ are identical or different and each independently selected from hydrogen, halogen, C₁₋₆ alkyl, C₁₋₆ alkoxy.

In some embodiments, R₇, R₈, R₉ and R₁₀ are identical or different and each independently selected from hydrogen, fluorine, chlorine, bromine, methyl, ethyl, propyl, methoxy, ethoxy, propoxy.

In some embodiments, the silanizing agent is selected from one or more of monomethylchlorosilane, dimethylchlorosilane, monomethylmethoxysilane, dimethylmethoxysilane, monomethylethoxysilane and dimethylethoxysilane.

In the present invention, the silanizing agent is used for a directional structural modification of pore walls of the molecular sieve precursor under an acidic condition.

In some embodiments, the silicon source is selected from one or more of silica sol, silica gel, tetraethyl orthosilicate and silicic acid.

In some embodiments, the aluminum source is selected from one or more of aluminum hydroxide, aluminum isopropoxide, aluminum nitrate and aluminum oxide.

In some embodiments, the solvent is selected from water.

In some embodiments, the mixture contains no alkali metal or alkaline earth metal.

According to one embodiment of the present invention, in the method for synthesizing the molecular sieve, the mixture contains no alkali source from the perspective of being more conducive to obtaining the SCM-53 molecular sieve of the present invention. Examples of the alkali source include basic substances other than the silicon source, the aluminum source and the organic structure-directing agent, specifically any alkali source conventionally used in the art for the purpose of making the system alkaline, and more specifically inorganic bases with alkali metals or alkaline earth metals as cations, in particular sodium hydroxide, potassium hydroxide and the like. Herein, the term "contains no alkali source" means that no alkali source is intentionally or actively introduced into the mixture.

In some embodiments, the crystallization treatment of the mixture is a dynamic crystallization with rotation. In some embodiments, the rotation speed is 10 rpm-60 rpm, for example, 20 rpm, 30 rpm or 40 rpm.

In some embodiments, the crystallization treatment of the mixture is a dynamic crystallization with stirring. In some embodiments, the stirring speed is 30 rpm-400 rpm, for example, 50 rpm, 100 rpm, 150 rpm, 200 rpm, 250 rpm, 300 rpm or 350 rpm.

In some embodiments, the crystallization conditions of the mixture are a crystallization at 130°C-180°C, for example, 135°C, 140°C, 145°C, 150°C, 155°C, 160°C, 165°C, 170°C or 175°C, for 1-12 days, such as 2 days, 3 days, 4 days, 5 days, 6 days, 7 days, 8 days, 9 days, 10 days or 11 days. In some embodiments, the crystallization conditions of the mixture are the crystallization at 135°C-175°C for 2-11 days. In some embodiments, the crystallization conditions of the mixture are the crystallization at 140°C-170°C for 3-10 days.

In some embodiments, the temperature of the hydrothermal treatment is 80°C-190°C, for example, 90°C, 100°C, 110°C, 120°C, 130°C, 140°C, 150°C, 160°C, 170°C or 180°C.

In some embodiments, the time of the hydrothermal treatment is 5 h-48 h, for example, 8 h, 10 h, 12 h, 15 h, 20 h, 24 h, 28 h, 30 h, 32 h, 36 h, 40 h, 44 h or 46 h.

In some embodiments, the calcination temperature is 400°C-800°C, for example, 450°C, 500°C, 550°C, 600°C, 650°C, 700°C or 750°C. In some embodiments, the calcination temperature is 500°C-700°C.

In some embodiments, the calcination time is 2 h-10 h, for example, 3 h, 4 h, 5 h, 6 h, 7 h, 8 h or 9 h. In some embodiments, the calcination time is 3 h-9 h.

In some embodiments, the calcination is carried out in an oxygen-containing atmosphere.

In some embodiments, the calcination conditions of the hydrothermally treated product are a calcination at 400°C-800°C in an oxygen-containing atmosphere for 2-10 h, preferably the calcination at 500°C-700°C in an oxygen-containing atmosphere for 3-9 h.

According to the present invention, the various SCM-53 molecular sieves obtained above can be applied in any physical forms, such as powder, particle or molded product (such as strip, clover shape and the like). These physical forms can be obtained according to any methods conventionally known in the art without a special limitation.

In the third aspect, the present invention provides an SCM-53 molecular sieve whose X-ray diffraction pattern includes one or more of diffraction peaks at 2θ of 4.221°±0.30°, 8.669°±0.30°, 12.158°±0.30° and 25.982°±0.30°. In particular, the X-ray diffraction pattern of the SCM-53 molecular sieve includes a diffraction peak at 2θ of 4.221°±0.30°, and optionally further includes one or more of diffraction peaks at 2θ of 8.669°±0.30°, 12.158°±0.30° and 25.982°±0.30°.

In some embodiments, the X-ray diffraction pattern of the SCM-53 molecular sieve includes a diffraction peak at 2θ of 4.221°±0.03°, 4.221°±0.05°, 4.221°±0.07°, 4.221°±0.1°, 4.221°±0.13°, 4.221°±0.15°, 4.221°±0.17°, 4.221°±0.2°, 4.221°±0.23°, 4.221°±0.25° or 4.221°±0.27°.

In some embodiments, the X-ray diffraction pattern of the SCM-53 molecular sieve includes a diffraction peak at 2θ of 8.669°±0.03°, 8.669°±0.05°, 8.669°±0.07°, 8.669°±0.1°, 8.669°±0.13°, 8.669°±0.15°, 8.669°±0.17°, 8.669°±0.2°, 8.669°±0.23°, 8.669°±0.25° or 8.669°±0.27°.

In some embodiments, the X-ray diffraction pattern of the SCM-53 molecular sieve includes a diffraction peak at 2θ of 12.158°±0.03°, 12.158°±0.05°, 12.158°±0.07°, 12.158°±0.1°, 12.158°±0.13°, 12.158°±0.15°, 12.158°±0.17°, 12.158°±0.2°, 12.158°±0.23°, 12.158°±0.25° or 12.158°±0.27°.

In some embodiments, the X-ray diffraction pattern of the SCM-53 molecular sieve includes a diffraction peak at 2θ of 25.982°±0.03°, 25.982°±0.05°, 25.982°±0.07°, 25.982°±0.1°, 25.982°±0.13°, 25.982°±0.15°, 25.982°±0.17°, 25.982°±0.2°, 25.982°±0.23°, 25.982°±0.25° or 25.982°±0.27°.

In some embodiments, the intensity of the diffraction peak at 2θ of 4.221°±0.30° and/or 25.982°±0.30° is stronger than the intensity of the diffraction peak at 2θ of 8.669°±0.30° and/or 12.158°±0.30°.

In some embodiments, the intensity of the diffraction peak at 2θ of 4.221°±0.30° is stronger than the intensity of the diffraction peak at 2θ of 25.982°±0.30°.

In some embodiments, the intensity of the diffraction peak at 2θ of 4.221°±0.30° is weaker than the intensity of the diffraction peak at 2θ of 25.982°±0.30°.

In some embodiments, in the X-ray diffraction pattern of the SCM-53 molecular sieve, the diffraction peak at 2θ of 4.221°±0.30° is the strongest peak.

In some embodiments, in the X-ray diffraction pattern of the SCM-53 molecular sieve, the diffraction peak at 2θ of 25.982°±0.30° is the strongest peak.

In some embodiments, the X-ray diffraction pattern of the SCM-53 molecular sieve further includes one or more of diffraction peaks at 2θ of 14.164°±0.30°, 18.35°±0.50°, 22.946°±0.30° and 24.019°±0.50°.

In some embodiments, the X-ray diffraction pattern of the SCM-53 molecular sieve further includes a diffraction peak at 2θ of 14.164°±0.03°, 14.164°±0.05°, 14.164°±0.07°, 14.164°±0.1°, 14.164°±0.13°, 14.164°±0.15°, 14.164°±0.17°, 14.164°±0.2°, 14.164°±0.23°, 14.164°±0.25°, or 14.164°±0.27°.

In some embodiments, the X-ray diffraction pattern of the SCM-53 molecular sieve further includes a diffraction peak at 2θ of 18.35°±0.03°, 18.35°±0.05°, 18.35°±0.07°, 18.35°±0.1°, 18.35°±0.13°, 18.35°±0.15°, 18.35°±0.17°, 18.35°±0.2°, 18.35°±0.23°, 18.35°±0.25°, 18.35°±0.27°, 18.35°±0.3°, 18.35°±0.33°, 18.35°±0.35°, 18.35°±0.37°, 18.35°±0.4°, 18.35°±0.43°, 18.35°±0.45°, or 18.35°±0.47°.

In some embodiments, the X-ray diffraction pattern of the SCM-53 molecular sieve further includes a diffraction peak at 2θ of 22.946°±0.03°, 22.946°±0.05°, 22.946°±0.07°, 22.946°±0.1°, 22.946°±0.13°, 22.946°±0.15°, 22.946°±0.17°, 22.946°±0.2°, 22.946°±0.23°, 22.946°±0.25° or 22.946°±0.27°.

In some embodiments, the X-ray diffraction pattern of the SCM-53 molecular sieve further includes a diffraction peak at 2θ of 24.019°±0.03°, 24.019°±0.05°, 24.019°±0.07°, 24.019°±0.1°, 24.019°±0.13°, 24.019°±0.15°, 24.019°±0.17°, 24.019°±0.2°, 24.019°±0.23°, 24.019°±0.25°, 24.019°±0.27°, 24.019°±0.3°, 24.019°±0.33°, 24.019°±0.35°, 24.019°±0.37°, 24.019°±0.4°, 24.019°±0.43°, 24.019°±0.45° or 24.019°±0.47°.

In some embodiments, the X-ray diffraction pattern of the SCM-53 molecular sieve includes the diffraction peaks shown in Table A':

**Table A'**

| 2θ | Relative Intensity (I/I₀×100) |
|---|---|
| 4.221°±0.30° | vs |
| 8.669°±0.30° | m-s |
| 12.158°±0.30° | m-s |
| 25.982°±0.30° | s-vs |

In some embodiments, the X-ray diffraction pattern of the SCM-53 molecular sieve includes the diffraction peaks shown in Table A'-1:

**Table A'-1**

| 2θ | Relative Intensity (I/I₀×100) |
|---|---|
| 4.221°±0.30° | s-vs |
| 8.669°±0.30° | m-s |
| 12.158°±0.30° | m-s |
| 25.982°±0.30° | vs |

In some embodiments, the X-ray diffraction pattern of the SCM-53 molecular sieve includes the diffraction peaks shown in Table A'-2:

**Table A'-2**

| 2θ | Relative Intensity (I/I₀×100) |
|---|---|
| 4.221°±0.30° | 100 |
| 8.669°±0.30° | 30-50 |
| 12.158°±0.30° | 30-50 |
| 25.982°±0.30° | 60-100 |

In some embodiments, the X-ray diffraction pattern of the SCM-53 molecular sieve includes the diffraction peaks shown in Table B':

**Table B'**

| 2θ | Relative Intensity (I/I₀×100) |
|---|---|
| 4.221°±0.30° | vs |
| 8.669°±0.30° | m-s |
| 12.158°±0.30° | m-s |
| 14.164°±0.30° | m-s |
| 18.35°±0.50° | w-m |
| 22.946°±0.30° | w-m |
| 24.019°±0.50° | m-s |
| 25.982°±0.30° | s-vs |

In some embodiments, the X-ray diffraction pattern of the SCM-53 molecular sieve includes the diffraction peaks shown in Table B'-1:

**Table B'-1**

| 2θ | Relative Intensity (I/I₀×100) |
|---|---|
| 4.221°±0.30° | s-vs |
| 8.669°±0.30° | m-s |
| 12.158°±0.30° | m-s |
| 14.164°±0.30° | m-s |
| 18.35°±0.50° | w-m |
| 22.946°±0.30° | w-m |
| 24.019°±0.50° | m-s |
| 25.982°±0.30° | vs |

In some embodiments, the X-ray diffraction pattern of the SCM-53 molecular sieve includes the diffraction peaks shown in Table B'-2:

**Table B'-2**

| 2θ | Relative Intensity (I/I₀×100) |
|---|---|
| 4.221°±0.30° | 100 |
| 8.669°±0.30° | 30-50 |
| 12.158°±0.30° | 30-50 |
| 14.164°±0.30° | 20-45 |
| 18.35°±0.50° | 15-35 |
| 22.946°±0.30° | 15-35 |
| 24.019°±0.50° | 20-40 |
| 25.982°±0.30° | 60-100 |

In some embodiments, the X-ray diffraction pattern of the SCM-53 molecular sieve includes the diffraction peaks shown in Table C':

**Table C'**

| 2θ | d-spacing (Å)^{(b)} | Relative Intensity (I/I₀×100) |
|---|---|---|
| 4.221°±0.30° | 20.916 | vs |
| 8.669°±0.30° | 10.192 | m-s |
| 12.158°±0.30° | 7.2738 | m-s |
| 25.982°±0.30° | 3.4266 | s-vs |

wherein b: varies with 2θ.

In some embodiments, the X-ray diffraction pattern of the SCM-53 molecular sieve includes the diffraction peaks shown in Table C'-1:

**Table C'-1**

| 2θ | d-spacing (Å)^{(b)} | Relative Intensity (I/I₀×100) |
|---|---|---|
| 4.221°±0.30° | 20.916 | s-vs |
| 8.669°±0.30° | 10.192 | m-s |
| 12.158°±0.30° | 7.2738 | m-s |
| 25.982°±0.30° | 3.4266 | vs |

wherein b: varies with 2θ.

In some embodiments, the X-ray diffraction pattern of the SCM-53 molecular sieve includes the diffraction peaks shown in Table C'-2:

**Table C'-2**

| 2θ | d-spacing (Å)^{(b)} | Relative Intensity (I/I₀×100) |
|---|---|---|
| 4.221°±0.30° | 20.916 | 100 |
| 8.669°±0.30° | 10.192 | 30-50 |
| 12.158°±0.30° | 7.2738 | 30-50 |
| 25.982°±0.30° | 3.4266 | 60-100 |

wherein b: varies with 2θ.

In some embodiments, the X-ray diffraction pattern of the SCM-53 molecular sieve includes the diffraction peaks shown in Table D':

**Table D'**

| 2θ | d-spacing (Å)^{(b)} | Relative Intensity (I/I₀×100) |
|---|---|---|
| 4.221°±0.30° | 20.916 | vs |
| 8.669°±0.30° | 10.192 | m-s |
| 12.158°±0.30° | 7.2738 | m-s |
| 14.164°±0.30° | 6.2478 | m-s |
| 18.35°±0.50° | 4.8308 | w-m |
| 22.946°±0.30° | 4.1399 | w-m |
| 24.019°±0.50° | 3.7019 | m-s |
| 25.982°±0.30° | 3.4266 | s-vs |

wherein b: varies with 2θ.

In some embodiments, the X-ray diffraction pattern of the SCM-53 molecular sieve includes the diffraction peaks shown in Table D'-1:

**Table D'-1**

| 2θ | d-spacing (Å)^{(b)} | Relative Intensity (I/I₀×100) |
|---|---|---|
| 4.221°±0.30° | 20.916 | Vs |
| 8.669°±0.30° | 10.192 | m-s |
| 12.158°±0.30° | 7.2738 | m-s |
| 14.164°±0.30° | 6.2478 | m-s |
| 18.35°±0.50° | 4.8308 | w-m |
| 22.946°±0.30° | 4.1399 | w-m |
| 24.019°±0.50° | 3.7019 | m-s |
| 25.982°±0.30° | 3.4266 | s-vs |

wherein b: varies with 2θ.

In some embodiments, the X-ray diffraction pattern of the SCM-53 molecular sieve includes the diffraction peaks shown in Table D'-2:

**Table D'-2**

| 2θ | d-spacing (Å)^{(b)} | Relative Intensity (I/I₀×100) |
|---|---|---|
| 4.221°±0.30° | 20.916 | 100 |
| 8.669°±0.30° | 10.192 | 30-50 |
| 12.158°±0.30° | 7.2738 | 30-50 |
| 14.164°±0.30° | 6.2478 | 20-45 |
| 18.35°±0.50° | 4.8308 | 15-35 |
| 22.946°±0.30° | 4.1399 | 15-35 |
| 24.019°±0.50° | 3.7019 | 20-40 |
| 25.982°±0.30° | 3.4266 | 60-100 |

wherein b: varies with 2θ.

In some embodiments, the framework topological structure of the SCM-53 molecular sieve contains natural tillings of [4²▪5⁴▪10⁴], [5²▪6▪10²], [4▪5⁴▪6⁵▪7⁴] and [6▪7²].

In some embodiments, the composition of the natural tillings of the framework topological structure of the SCM-53 molecular sieve includes one [4²▪5⁴▪10⁴], two [5²▪6▪10²], two [4▪5⁴▪6⁵▪7⁴] and four [6▪7²].

In some embodiments, the SCM-53 molecular sieve includes a 10×10-membered ring pore system.

In some embodiments, the SCM-53 molecular sieve has one or more of 4-membered ring, 5-membered ring, 6-membered ring, 7-membered ring and 10-membered ring.

In some embodiments, the SCM-53 molecular sieve belongs to a monoclinic crystal system.

In some embodiments, the unit cell parameters of the monoclinic crystal system of the SCM-53 molecular sieve include a = 8.0 Å-11.5 Å, preferably a = 8.5 Å-11.0 Å, more preferably a = 9.0 Å-10.5 Å.

In some embodiments, the unit cell parameters of the monoclinic crystal system of the SCM-53 molecular sieve include b = 8.0 Å-11.5 Å, preferably b = 8.5 Å-11.0 Å, more preferably b = 9.0 Å-11.0 Å.

In some embodiments, the unit cell parameters of the monoclinic crystal system of the SCM-53 molecular sieve include c = 18.0 Å-22.0 Å, preferably c = 18.5 Å-21.5 Å, more preferably c = 19.0 Å-21.0 Å.

In some embodiments, the unit cell parameters of the monoclinic crystal system of the SCM-53 molecular sieve include α = 90°, γ = 90°.

In some embodiments, the unit cell parameter of the monoclinic crystal system of the SCM-53 molecular sieve is β = 100°-125°, preferably β = 105°-115°.

In some embodiments, the SCM-53 molecular sieve includes silicon, aluminum and oxygen.

In some embodiments, in the SCM-53 molecular sieve, the molar ratio of silica to alumina (i.e., silica-alumina ratio) is 10-400, for example, 15, 20, 25, 30, 35, 40, 45, 50, 55, 60, 65, 70, 75, 80, 85, 90, 95, 100, 105, 110, 115, 120, 125, 130, 135, 140, 145, 150, 155, 160, 165, 170, 175, 180, 185, 190, 195, 200, 205, 210, 215, 220, 225, 230, 235, 240, 245, 250, 255, 260, 265, 270, 275, 280, 285, 290, 300, 310, 320, 330, 340, 350, 360, 370, 380, 390 or any value therebetween. In some embodiments, the molar ratio of silica to alumina is 15-350.

In some embodiments, the SCM-53 molecular sieve has a chemical composition of mSiO₂·Al₂O₃ with a molar ratio where 10≤m≤400, for example, 15, 20, 25, 30, 35, 40, 45, 50, 55, 60, 65, 70, 75, 80, 85, 90, 95, 100, 105, 110, 115, 120, 125, 130, 135, 140, 145, 150, 155, 160, 165, 170, 175, 180, 185, 190, 195, 200, 205, 210, 215, 220, 225, 230, 235, 240, 245, 250, 255, 260, 265, 270, 275, 280, 285, 290, 300, 310, 320, 330, 340, 350, 360, 370, 380, 390 or any value therebetween.

In some embodiments, 15≤m≤350. In some embodiments, 20≤m≤300.

In some embodiments, crystals of the SCM-53 molecular sieve have a nanosheet morphology. In some embodiments, the average thickness of the crystals is less than or equal to 30 nm.

In some embodiments, the average thickness of the crystals is 2 nm-27 nm, for example, 4 nm, 5 nm, 6 nm, 7 nm, 8 nm, 9 nm, 10 nm, 11 nm, 12 nm, 13 nm, 14 nm, 15 nm, 16 nm, 17 nm, 18 nm, 19 nm, 20 nm, 21 nm, 22 nm, 23 nm, 24 nm, 25 nm, 26 nm or any value therebetween. In some embodiments, the average thickness of the crystals is 5 nm-25 nm.

In some embodiments, the specific surface area of the SCM-53 molecular sieve is 100 m²/g-500 m²/g, for example, 150 m²/g, 200 m²/g, 210 m²/g, 220 m²/g, 230 m²/g, 240 m²/g, 250 m²/g, 260 m²/g, 270 m²/g, 280 m²/g, 290 m²/g, 300 m²/g, 310 m²/g, 320 m²/g, 330 m²/g, 340 m²/g, 350 m²/g, 360 m²/g, 370 m²/g, 380 m²/g, 390 m²/g, 400 m²/g, 430 m²/g, 450 m²/g, 470 m²/g or any value therebetween. In some embodiments, the specific surface area of the SCM-53 molecular sieve is 200 m²/g-400 m²/g. In some embodiments, the specific surface area of the SCM-53 molecular sieve is 300 m²/g-450 m²/g.

In some embodiments, the pore volume of the SCM-53 molecular sieve is 0.015 cm³/g-1.0 cm³/g, for example, 0.07 cm³/g, 0.1 cm³/g, 0.13 cm³/g, 0.15 cm³/g, 0.17 cm³/g, 0.2 cm³/g, 0.23 cm³/g, 0.25 cm³/g, 0.27 cm³/g, 0.3 cm³/g, 0.33 cm³/g, 0.35 cm³/g, 0.37 cm³/g, 0.4 cm³/g, 0.43 cm³/g, 0.45 cm³/g, 0.47 cm³/g, 0.5 cm³/g, 0.55 cm³/g, 0.6 cm³/g, 0.65 cm³/g, 0.7 cm³/g, 0.75 cm³/g, 0.8 cm³/g, 0.85 cm³/g, 0.9 cm³/g, 0.95 cm³/g or any value therebetween. In some embodiments, the pore volume of the SCM-53 molecular sieve is 0.05 cm³/g-0.75 cm³/g.

In some embodiments, the SCM-53 molecular sieve further includes elements other than silicon and aluminum, preferably one or more elements selected from sodium, potassium, germanium, titanium, boron, zirconium, tin and iron.

In some embodiments, the SCM-53 molecular sieve further includes one or more elements selected from sodium, potassium, germanium, titanium, boron, zirconium, tin and iron.

In the fourth aspect, the present invention provides another method for preparing an SCM-53 molecular sieve, comprising steps of:
S1: subjecting a mixture containing a silicon source, an aluminum source, an organic structure-directing agent and a solvent to a crystallization treatment to obtain a crystallized solid product;
S2: mixing the crystallized solid product with a silanizing agent under an acidic condition, and then subjecting the mixture to a hydrothermal treatment to obtain a hydrothermally treated solid product;
S3: drying and calcining the hydrothermally treated solid product;
preferably, the organic structure-directing agent includes a compound represented by Formula I': 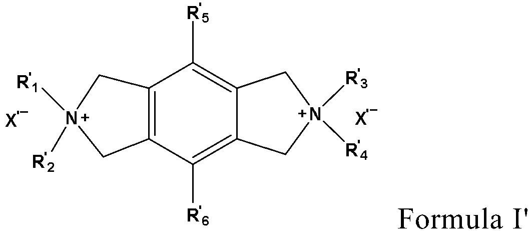
in Formula I', R'₁, R'₂, R'₃ and R'₄ are identical or different and each independently selected from C₁₋₈ alkyl; X'⁻ is selected from OH⁻, halogen anions, carbonate, nitrate or monovalent organic acid radicals; R'₅ and R'₆ are identical or different and each independently selected from hydrogen, halogen, C₁₋₄ alkyl.

In some embodiments, in Formula I', R'₁, R'₂, R'₃ and R'₄ are identical or different and each independently selected from C₁₋₄ alkyl, for example, methyl, ethyl or propyl. In some embodiments, in Formula I', R'₁ and R'₃ are identical, and R'₂ and R'₄ are identical.

In some embodiments, X⁻ is selected from OH⁻, bromide ion, chloride ion, iodide ion, nitrate or acetate.

In some embodiments, R'₅ and R'₆ are identical or different and each independently selected from hydrogen, fluorine, chlorine, bromine, methyl, ethyl or propyl.

In some embodiments, at least one of R'₅ and R'₆ is hydrogen. In some embodiments, both of R'₅ and R'₆ are hydrogen.

In some embodiments, the organic structure-directing agent is selected from one or more of 2,2,6,6-tetramethyl-1,2,3,5,6,7-hexahydropyrrolo[3,4-*f*]isoindolium hydroxide, 2,2,6,6-tetramethyl-1,2,3,5,6,7-hexahydropyrrolo[3,4-f]isoindolium bromide and 2,2,6,6-tetramethyl-1,2,3,5,6,7-hexahydropyrrolo[3,4-f]isoindolium chloride.

In some embodiments, the molar ratio of the silicon source calculated as SiO₂ to the aluminum source calculated as Al₂O₃ is 1:(0.0025-0.25), for example, 1:0.003, 1:0.004, 1:0.005, 1:0.006, 1:0.007, 1:0.008, 1:0.009, 1:0.0095, 1:0.01, 1:0.013, 1:0.015, 1:0.017, 1:0.02, 1:0.023, 1:0.025, 1:0.027, 1:0.03, 1:0.033, 1:0.035, 1:0.037, 1:0.04, 1:0.043, 1:0.045, 1:0.047, 1:0.05, 1:0.053, 1:0.055, 1:0.057, 1:0.06, 1:0.063, 1:0.065, 1:0.067, 1:0.07, 1:0.073, 1:0.075, 1:0.077, 1:0.08, 1:0.083, 1:0.085, 1:0.047, 1:0.09, 1:0.093, 1:0.095, 1:0.097, 1:0.1, 1:0.105, 1:0.12, 1:0.125, 1:0.13, 1:0.135, 1:0.14, 1:0.145, 1:0.15, 1:0.155, 1:0.16, 1:0.165, 1:0.17, 1:0.175, 1:0.18, 1:0.185, 1:0.19, 1:0.195, 1:0.1, 1:0.205, 1:0.22, 1:0.225, 1:0.23, 1:0.235, 1:0.24, 1:0.245 or any value therebetween.

In some embodiments, the molar ratio of the silicon source to the aluminum source is 1:(0.0025-0.2). In some embodiments, the molar ratio of the silicon source to the aluminum source is 1:(0.05-0.2).

In some embodiments, the molar ratio of the silicon source calculated as SiO₂ to the organic structure-directing agent is 1:(0.050-0.50), for example, 1:0.05, 1:0.06, 1:0.07, 1:0.08, 1:0.09, 1:0.1, 1:0.11, 1:0.12, 1:0.13, 1:0.14, 1:0.15, 1:0.17, 1:0.20, 1:0.23, 1:0.25, 1:0.27, 1:0.30, 1:0.33, 1:0.35, 1:0.37, 1:0.40, 1:0.43, 1:0.45, 1:0.47 or any value therebetween.

In some embodiments, the molar ratio of the silicon source to the organic structure-directing agent is 1:(0.10-0.50). In some embodiments, the molar ratio of the silicon source to the organic structure-directing agent is 1:(0.30-0.50).

In some embodiments, the molar ratio of the silicon source calculated as SiO₂ to the solvent is 1:(8-100), for example, 1:10, 1:15, 1:20, 1:25, 1:30, 1:35, 1:40, 1:45, 1:50, 1:55, 1:60, 1:65, 1:70, 1:75, 1:80, 1:85, 1:90, 1:95 or any value therebetween.

In some embodiments, the molar ratio of the silicon source to the solvent is 1:(15-100). In some embodiments, the molar ratio of the silicon source to the solvent is 1:(15-50).

In some embodiments, the acidic condition is provided by an acid solution. In some embodiments, the concentration of the acid solution is 0.5 mol/L-6 mol/L, for example, 1 mol/L, 1.5 mol/L, 2 mol/L, 2.5 mol/L, 3 mol/L, 3.5 mol/L, 4 mol/L, 4.5 mol/L, 5 mol/L, 5.5 mol/L or any value therebetween. In some embodiments, the concentration of the acid solution is 1 mol/L-5 mol/L. In some embodiments, the concentration of the acid solution is 1.5 mol/L-4.5 mol/L.

In some embodiments, the liquid-solid ratio of the acid solution to the crystallized product is (10-100) mL:1 g, for example, 20 mL:1 g, 30 mL:1 g, 40 mL:1 g, 50 mL:1 g, 60 mL:1 g, 70 mL:1 g, 80 mL:1 g or 90 mL:1 g. In some embodiments, the liquid-solid ratio of the acid solution to the crystallized product is (20-80) mL:1 g. In some embodiments, the liquid-solid ratio of the acid solution to the crystallized product is (40-60) mL:1 g.

In some embodiments, the mass ratio of the silanizing agent to the crystallized product is (0.1-4):1, for example, 0.2:1, 0.3:1, 0.4:1, 0.5:1, 0.6:1, 0.7:1, 0.8:1, 0.9:1, 1.0:1, 1.1:1, 1.2:1, 1.3:1, 1.4:1, 1.5:1, 1.6:1, 1.7:1, 1.8:1, 1.9:1, 2.0:1, 2.3:1, 2.5:1, 2.7:1, 3.0:1, 3.3:1, 3.5:1 or 3.7:1. In some embodiments, the mass ratio of the silanizing agent to the crystallized product is (0.2-2):1. In some embodiments, the mass ratio of the silanizing agent to the crystallized product is (0.2-2.5):1.

In some embodiments, the acid solution is selected from an aqueous hydrochloric acid solution, an aqueous acetic acid solution, an aqueous nitric acid solution, an ethanol hydrochloric acid solution, an ethanol acetic acid solution or an ethanol nitric acid solution.

In some embodiments, the silanizing agent includes a compound represented by Formula II: 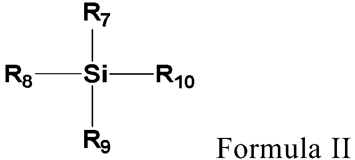 in Formula II, R₇, R₈, R₉ and R₁₀ are identical or different and each independently selected from hydrogen, halogen, C₁₋₆ alkyl, C₁₋₆ alkoxy.

In some embodiments, R₇, R₈, R₉ and R₁₀ are identical or different and each independently selected from hydrogen, fluorine, chlorine, bromine, methyl, ethyl, propyl, methoxy, ethoxy, propoxy.

In some embodiments, R₇, R₈, R₉ and R₁₀ are identical and all selected from C₁₋₄ alkoxy.

In some embodiments, the silanizing agent is selected from one or more of tetramethoxysilane, tetraethoxysilane, tetrapropoxysilane, tetraisopropoxysilane, monomethylchlorosilane, dimethylchlorosilane, monomethylmethoxysilane, dimethylmethoxysilane, monomethylethoxysilane and dimethylethoxysilane.

In the present invention, the silanizing agent is used for a directional structural modification of pore walls of the molecular sieve precursor under an acidic condition.

In some embodiments, the silicon source is selected from one or more of silica sol, silica gel, tetraethyl orthosilicate, white carbon black and silicic acid.

In some embodiments, the aluminum source is selected from one or more of aluminum hydroxide, aluminum isopropoxide, aluminum nitrate and aluminum oxide.

In some embodiments, the solvent is selected from water.

In some embodiments, the mixture contains no alkali metal or alkaline earth metal.

According to one embodiment of the present invention, in the method for synthesizing the molecular sieve, the mixture contains no alkali source from the perspective of being more conducive to obtaining the SCM-53 molecular sieve of the present invention. Examples of the alkali source include basic substances other than the silicon source, the aluminum source and the organic structure-directing agent, specifically any alkali source conventionally used in the art for the purpose of making the system alkaline, and more specifically inorganic bases with alkali metals or alkaline earth metals as cations, in particular sodium hydroxide, potassium hydroxide and the like. Herein, the term "contains no alkali source" means that no alkali source is intentionally or actively introduced into the mixture.

In some embodiments, the crystallization treatment of the mixture is a dynamic crystallization with rotation. In some embodiments, the rotation speed is 10 rpm-60 rpm, for example, 20 rpm, 30 rpm or 40 rpm.

In some embodiments, the crystallization treatment of the mixture is a dynamic crystallization with stirring. In some embodiments, the stirring speed is 30 rpm-400 rpm, for example, 50 rpm, 100 rpm, 150 rpm, 200 rpm, 250 rpm, 300 rpm or 350 rpm.

In some embodiments, the crystallization conditions of the mixture are a crystallization at 130°C-180°C, for example, 135°C, 140°C, 145°C, 150°C, 155°C, 160°C, 165°C, 170°C or 175°C, for 1-12 days, such as 2 days, 3 days, 4 days, 5 days, 6 days, 7 days, 8 days, 9 days, 10 days or 11 days. In some embodiments, the crystallization conditions of the mixture are the crystallization at 135°C-175°C for 2-11 days. In some embodiments, the crystallization conditions of the mixture are the crystallization at 140°C-170°C for 3-10 days.

In some embodiments, the temperature of the hydrothermal treatment is 80°C-190°C, for example, 90°C, 100°C, 110°C, 120°C, 130°C, 140°C, 150°C, 160°C, 170°C or 180°C.

In some embodiments, the time of the hydrothermal treatment is 5 h-48 h, for example, 8 h, 10 h, 12 h, 15 h, 20 h, 24 h, 28 h, 30 h, 32 h, 36 h, 40 h, 44 h or 46 h.

In some embodiments, the calcination temperature is 400°C-800°C, for example, 450°C, 500°C, 550°C, 600°C, 650°C, 700°C or 750°C. In some embodiments, the calcination temperature is 500°C-700°C.

In some embodiments, the calcination time is 2 h-10 h, for example, 3 h, 4 h, 5 h, 6 h, 7 h, 8 h or 9 h. In some embodiments, the calcination time is 3 h-9 h.

In some embodiments, the calcination is carried out in an oxygen-containing atmosphere.

In some embodiments, the calcination conditions of the hydrothermally treated product are a calcination at 400°C-800°C in an oxygen-containing atmosphere for 2-10 h, preferably the calcination at 500°C-700°C in an oxygen-containing atmosphere for 3-9 h.

According to the present invention, the various SCM-53 molecular sieves obtained above can be applied in any physical forms, such as powder, particle or molded product (such as strip, clover shape and the like). These physical forms can be obtained according to any method conventionally known in the art without a special limitation.

In the fifth aspect, the present invention provides a molecular sieve composition comprising the SCM-53 molecular sieve of the present invention, in particular the SCM-53 molecular sieve according to the first or third aspect, or the SCM-53 molecular sieve prepared by the preparation method of the present invention, in particular the SCM-53 molecular sieve prepared by the preparation method according to the second or fourth aspect, and optionally a binder.

According to the present invention, the SCM-53 molecular sieve can be used in combination with other materials to obtain the SCM-53 molecular sieve composition. Examples of the other materials include active materials and inactive materials. Examples of the active materials include synthetic zeolites, natural zeolites or other types of molecular sieves. Examples of the inactive materials (generally referred to as binders) include clay, white clay, silica gel and alumina. The other materials may be used alone or in combination at any ratio. The amount of the other materials may directly refer to the conventional amount in the art and is not particularly limited.

In the sixth aspect, the present invention provides the use of the SCM-53 molecular sieve of the present invention, in particular the SCM-53 molecular sieve according to the first or third aspect, or the SCM-53 molecular sieve prepared by the preparation method of the present invention, in particular the SCM-53 molecular sieve prepared by the preparation method according to the second or fourth aspect, or the molecular sieve composition according to the fifth aspect, in an adsorption separation, an ion exchange or a catalytic conversion of organic compounds, or the use of the SCM-53 molecular sieve or the molecular sieve composition in a method of the adsorption separation, the ion exchange or the catalytic conversion of organic compounds.

In some embodiments, the SCM-53 molecular sieve or the molecular sieve composition is used to separate at least one component from a mixture of various components in a gas phase or a liquid phase. Accordingly, the at least one component can be partially or substantially completely separated from the mixture of various components, specifically and for example, by bringing the mixture into contact with the SCM-53 molecular sieve or the molecular sieve composition to selectively adsorb the component.

The SCM-53 molecular sieve involved in the present invention has a novel framework structure and/or chemical composition, and has a very important application value.

### DESCRIPTION OF THE DRAWINGS

Figure 1 is an X-ray diffraction (XRD) pattern of the sample in Example 1;
Figure 2 is a schematic diagram of the crystal structure (a 2×2×2 unit cell) of the sample in Example 1 projected along the directions of a) [100], b) [010], c) [110] and d) [010];
Figure 3 shows a) the composition of the natural tillings and b) the included natural tillings of the crystal topological structure of the sample in Example 1;
Figure 4 is a scanning electron microscope (SEM) image of the sample in Example 1;
Figure 5 is an N₂ adsorption-desorption curve of the sample in Example 1;
Figure 6 is an X-ray diffraction (XRD) pattern of the sample in Example 2;
Figure 7 is a scanning electron microscope (SEM) image of the sample in Example 2;
Figure 8 is an X-ray diffraction (XRD) pattern of the sample in Example 1';
Figure 9 is a scanning electron microscope (SEM) image of the sample in Example 1';
Figure 10 is an N₂ adsorption-desorption curve of the sample in Example 1';
Figure 11 is a ²⁷Al nuclear magnetic resonance spectrum of the sample in Example 1';
Figure 12 is a ²⁹Si nuclear magnetic resonance spectrum of the sample in Example 1';
Figure 13 is an X-ray diffraction (XRD) pattern of the sample in Example 2';
Figure 14 is a scanning electron microscope (SEM) image of the sample in Example 2';
Figure 15 is an X-ray diffraction (XRD) pattern of the sample in Example 3';
Figure 16 is a scanning electron microscope (SEM) image of the sample in Example 3';
Figure 17 is an X-ray diffraction (XRD) pattern of the sample in Comparative Example 1;
Figure 18 is an X-ray diffraction (XRD) pattern of the sample in Comparative Example 2.

### MODE OF CARRYING OUT THE INVENTION

The embodiments of the present invention will be described in detail below. However, it needs to be indicated that the protection scope of the present invention is not limited to these embodiments.

All the publications, the patent applications, the patents and other reference literatures mentioned in the present application are incorporated herein for reference. Unless otherwise defined, all the technical and scientific terms used in the present application have the meanings conventionally understood by those skilled in the art. In case of conflict, the definitions in the present application shall prevail.

When materials, substances, methods, steps, devices, or parts etc. are derived in the present application using the prefixes "known to those skilled in the art", "prior art", or similar terms, the objects derived from the prefixes cover those conventionally used in the art at the time of filing of the present application, and also include those that are not commonly used currently but will become applicable for similar purposes as generally recognized in the art.

In the context of the present application, except for the explicitly stated contents, any unmentioned matter is directly applicable to those known in the art without requiring any change. Moreover, any embodiment described in the present application can be combined freely with one or more other embodiments described in the present application. The technical solution or technical idea formed therefrom belongs to a part of the original disclosure of the present invention, but should not be considered as new contents that have not been disclosed or expected herein, unless those skilled in the art believe that the combination is obviously unreasonable.

In the context of the present application, in the XRD data of the molecular sieve, w, m, s and vs represent the diffraction peak intensities, wherein w denotes weak, m denotes medium, s denotes strong, and vs denotes very strong, which are well known to those skilled in the art. Generally, w indicates a relative intensity of less than 20, such as 5, 7, 10, 11, 12, 13, 14, 15, 16, 17, 18 or 19; m indicates a relative intensity of 20 to 40, such as 21, 23, 25, 27, 29, 30, 31, 33, 35, 37 or 39; s indicates a relative intensity of 40 to 70, such as 41, 43, 45, 47, 49, 50, 51, 53, 55, 57, 59, 60, 61, 63, 65, 67 or 69; and vs indicates a relative intensity of greater than 70, such as 75, 80, 85, 90, 95 or 100.

In the context of the present application, the structure of the molecular sieve is determined by the X-ray diffraction (XRD) pattern, which is measured by a powder X-ray diffractometer using a Cu-Kα radiation source and a nickel filter. Prior to sample testing, a scanning electron microscope (SEM) is used to observe the crystalization of the molecular sieve precursor sample to confirm that the sample contains only one type of crystal. That is, the molecular sieve sample is a pure phase. The XRD testing is then performed on this basis to ensure that there are no interference peaks of other crystals in the diffraction peaks of the XRD pattern.

In the context of the present application, the type and the composition of the natural tillings of the framework topological structure of the molecular sieve are analyzed using TOPOS topology software. The images of the natural tillings are drawn using 3dt software, and the unit cell parameters of the molecular sieve are obtained by Pawley fit of the powder XRD pattern.

In the context of the present application, including in the following examples and comparative examples, the model of the powder X-ray diffractometer for the molecular sieve is a Panalytical X PERPRO powder X-ray diffractometer for analyzing the phase of the sample. It involves a Cu Kα radiation source (λ = 1.54 Å), a nickel filter, a 2θ scanning range of 2° to 50°, an operating voltage of 40 KV, a current of 40 mA and a scanning rate of 10°/min.

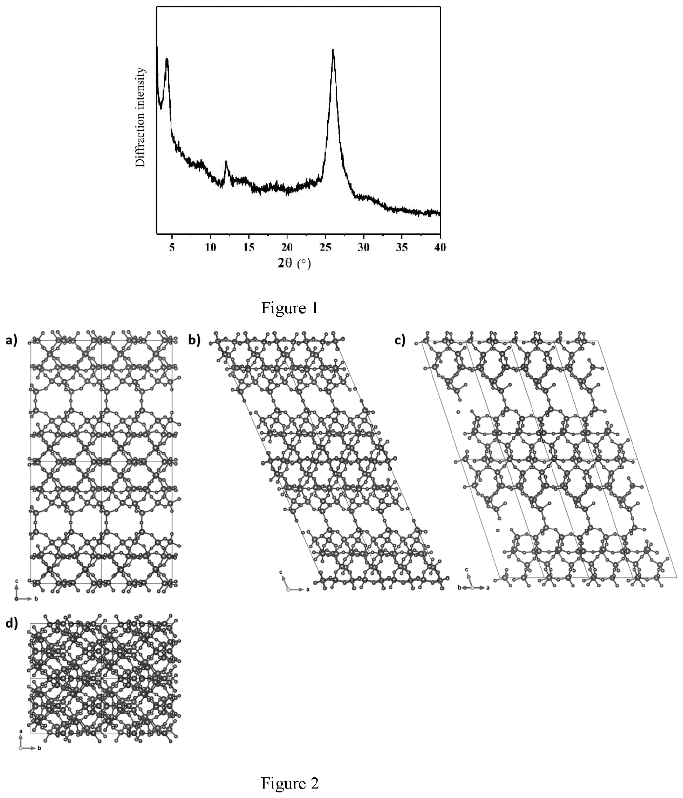

In some embodiments, the SCM-53 molecular sieve of the present invention has an X-ray diffraction pattern as shown in Figure 1 or Figure 6, or Figure 8, Figure 13, or Figure 15.

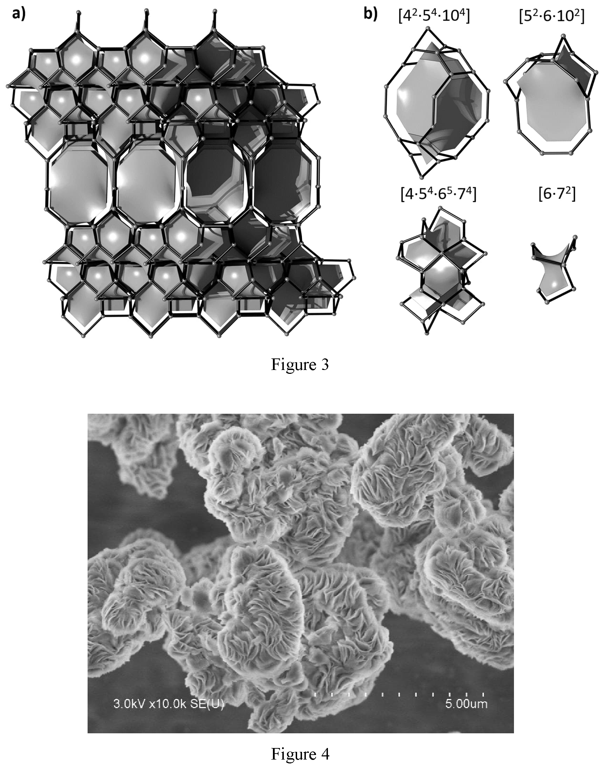

In some embodiments, the framework topological structure of the SCM-53 molecular sieve of the present invention comprises the natural tillings as shown in Figure 3b.

In some embodiments, the framework topological structure of the SCM-53 molecular sieve of the present invention has a repeating unit as shown in Figure 3a.

In the context of the present application, including in the following examples and comparative examples, the model of the scanning electron microscope (SEM) for the molecular sieve is a S-4800II field emission scanning electron microscope. The molecular sieve is observed using the scanning electron microscope at a magnification of 40,000 times. A viewing field is randomly selected, and the average value of the sum of the thicknesses of all crystals in the viewing field is calculated. This operation is repeated a total of 10 times. The average value of the sum of the 10 repetitions is taken as the crystal thickness. The size of all aggregates in the viewing field is measured by the same method.

In the context of the present application, including in the following examples and comparative examples, the model of the inductively coupled plasma atomic emission spectrometry (ICP) for the molecular sieve is Varian 725-ES. The analytical sample is dissolved in hydrofluoric acid to detect the content of the obtained elements, calculated in moles.

In the context of the present application, the term "specific surface area" refers to the total area possessed by a unit mass of sample, including the internal surface area and the external surface area. Non-porous samples only have an external surface area, such as Portland cement and some clay mineral particles; porous samples have an external surface area and an internal surface area, such as asbestos fibers, diatomaceous earth, and molecular sieves. The surface area of pores with a diameter of less than 2 nanometers in porous samples is the internal surface area, and the surface area after the internal surface area is deducted is called the external surface area. The external surface area per unit mass of the sample is referred to as the external specific surface area.

In the context of the present application, the term "pore volume" refers to the pore volume possessed by a unit mass of porous material. The term "total pore volume" refers to the volume of all pores (generally only pores with a channel diameter of less than 50 nanometers are included) possessed by a unit mass of molecular sieve. The term "micropore volume" refers to the volume of all micropores (generally referring to pores with a channel diameter of less than 2 nanometers) possessed by a unit mass of molecular sieve. The pore structure parameters of the molecular sieve, such as total pore volume, the micropore volume, the total specific surface area and the external specific surface area, are obtained by measuring the nitrogen physical adsorption-desorption isotherm of the molecular sieve using a physical adsorption instrument (e.g., the TriStar 3000 physical adsorption instrument from Micromeritics, USA), followed by calculation using the BET method and the t-plot method. The conditions of the nitrogen physical adsorption-desorption experiment are: a measurement temperature of -169°C, and a pretreatment of the molecular sieve under vacuum at 300°C for 10 h before measurement.

The technical solution of the present invention will be described in further detail below through examples, but the protection scope of the present invention is not limited thereto.

The 2,2-dimethyl-1,3-dihydroisoindolium hydroxide solution in the present invention was prepared by the following method:
6.7336 g of 1,2-bis(bromomethyl)benzene, 3.4551 g of anhydrous potassium carbonate (acid-binding agent) and 100 mL of N,N-dimethylformamide were mixed and stirred uniformly at a rotation speed of 1000 rpm. Under a reflux device, the temperature was raised to 60°C with stirring, and then 12.5 mL of dimethylamine (tetrahydrofuran solution of dimethylamine, a 2M solution in THF) was added dropwise to the system at a constant pressure. The dropping rate was controlled to be 3-4 seconds per drop. The final material ratio (molar ratio) in the reaction system was: anhydrous potassium carbonate / 1,2-bis(bromomethyl)benzene = 1, dimethylamine / 1,2-bis(bromomethyl)benzene = 1, N,N-dimethylformamide / 1,2-bis(bromomethyl)benzene = 51.7.

After the dropwise addition was completed, the reflux was continued for 8 h, and the mixture was left to stand to the room temperature to obtain a reaction mixture. The reaction mixture was separated by filtration to remove the solid-phase acid-binding agent and some by-products. The liquid portion was subjected to a reduced pressure distillation to recover most of the N,N-dimethylformamide, which was used repeatedly. The remaining mother liquor was recrystallized several times using a tetrahydrofuran solution and dried to obtain a nitrogen-containing heterocyclic quaternary ammonium salt using 1,2-bis(bromomethyl)benzene as the raw material.

0.1 mol of the nitrogen-containing heterocyclic quaternary ammonium salt, an appropriate amount of deionized water and 100 g of an anion resin were stirred at the room temperature for 12 h. After filtration, a 2,2-dimethyl-1,3-dihydroisoindolium hydroxide ( 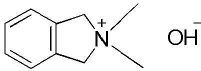 ) solution was obtained.

### Example 1

35.17 g of deionized water, 155.1 g of 2,2-dimethyl-1,3-dihydroisoindolium hydroxide solution (containing 17 wt% of OSDA (organic structure-directing agent) of 2,2-dimethyl-1,3-dihydroisoindolium hydroxide), 75.11 g of silica sol (containing 40 wt% of SiO₂) and 1.758 g of aluminum hydroxide were mixed uniformly and stirred at room temperature for 10 h to obtain a mixture. The final material ratio (molar ratio) was: Al₂O₃/SiO₂=0.02, OSDA/SiO₂=0.32, H₂O/SiO₂=40.

The mixture prepared above was loaded into a stainless steel autoclave and crystallized at 160°C under rotation at 30 rpm for 3 days. After crystallization, the product was centrifuged, washed to a nearly neutral pH (pH=7-8), and dried in an oven at 110°C to obtain a precursor.

The precursor prepared above was subjected to a silylation treatment: 10 g of the precursor, 400 mL of 2 mol/L nitric acid solution and 3 g of dimethylethoxysilane were mixed and stirred at the room temperature for 0.5 h. The mixed solution was hydrothermally treated at 170°C for 24 h, and finally calcined at 550°C in an oxygen-containing atmosphere for 6 h to obtain 16.5 g of a sample.

The XRD pattern of the sample was shown in Figure 1 and Table 1. The sample was a SCM-53 molecular sieve, with a yield of 55 wt%.

The structural information of the sample determined by the synchrotron radiation XRD was shown in Figure 2, Table 2, and Table 3, with information of hydrogen atoms omitted in the structural information table. The natural tilling composition of the sample was shown in Figure 3.

As shown in Figure 2, the sample was a molecular sieve including a two-dimensional 10×10-membered ring pore system, and the 4-membered ring, the 5-membered ring, the 6-membered ring, the 7-membered ring and the 10-membered ring existed in the sample structure.

As shown in Figure 3b, the framework topological structure of the sample contained the natural tillings of [4²▪5⁴▪10⁴], [5²▪6▪10²], [4▪5⁴▪6⁵▪7⁴] and [6▪7²].

As shown in Figure 3a, the composition of the natural tillings of the framework topological structure of the sample included one [4²▪5⁴▪10⁴], two [5²▪6▪10²], two [4▪5⁴▪6⁵▪7⁴] and four [6▪7²].

The SEM image of the sample was shown in Figure 4, presenting a nanosheet morphology.

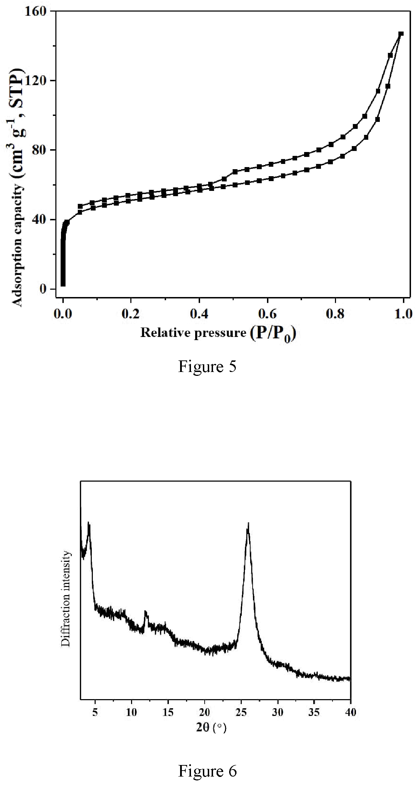

The N₂ adsorption-desorption curve of the sample was shown in Figure 5, with a specific surface area of 170 m²/g and a total pore volume of 0.17 cm³/g.

The silicon to aluminum molar ratio of the sample measured by the inductively coupled plasma atomic emission spectrometry (ICP) was 76.89 SiO₂•Al₂O₃.

**Table 1**

| 2θ | d-spacing (Å) | Relative Intensity (I/I₀×100) |
|---|---|---|
| 4.363° | 20.237 | 96.7 |
| 8.940° | 9.884 | 39.5 |
| 12.08° | 7.320 | 39.6 |
| 14.48° | 6.113 | 30.6 |
| 18.42° | 4.813 | 26.0 |
| 23.05° | 3.855 | 29.4 |
| 26.09° | 3.413 | 100 |

**Table 2**

| Space group | C*2* | | | |
|---|---|---|---|---|
| Unit cell parameters | a=9.2673 Å, b=10.9997 Å, c= 20.7083 Å, α=90°, β=113.5360° and γ=90° | | | |
| Atomic coordinates (T represents framework atoms) | | | | |
| Atom | X | y | z | Occupancy |
| T1 | 0.33005 | 0.97192 | 0.65748 | 1 |
| T2 | 0.27828 | 0.59567 | 0.99483 | 1 |
| T3 | 0.40431 | 0.29688 | 0.33697 | 1 |
| T4 | 0.20071 | 0.64885 | 0.23748 | 1 |
| T5 | 0.93174 | 0.76436 | 0.11603 | 1 |
| T6 | 0.4258 | 0.45737 | 0.22115 | 1 |
| T7 | 0.98424 | 0.27459 | 0.10878 | 1 |
| T8 | 0.19879 | 0.11829 | 0.22326 | 1 |
| T9 | 0.62047 | 0.87724 | 0.77698 | 1 |
| T10 | 0.50906 | 0.07286 | 0.57806 | 1 |
| T11 | 0 | 0.8906 | 0 | 1 |
| T12 | 0 | 0.46248 | 0 | 1 |
| O1 | 0.27733 | 0.54039 | 0.21052 | 1 |
| O2 | 0.89569 | 0.16845 | 0.05881 | 1 |
| O3 | 0.38839 | 0.38101 | 0.15053 | 1 |
| O4 | 0.01653 | 0.8078 | 0.06639 | 1 |
| O5 | 0.56016 | 0.553 | 0.23432 | 1 |
| O6 | 0.51847 | 0.21058 | 0.3985 | 1 |
| O7 | 0.13742 | 0.21137 | 0.16087 | 1 |
| O8 | 0.02988 | 0.38048 | 0.06771 | 1 |
| O9 | 0.88507 | 0.32825 | 0.15071 | 1 |
| O10 | 0.7824 | 0.68881 | 0.0687 | 1 |
| O11 | 0.29225 | 0.77708 | 0.25125 | 1 |
| O12 | 0.27505 | 0.20469 | 0.28905 | 1 |
| O13 | 0.03434 | 0.67427 | 0.177 | 1 |
| O14 | 0.48655 | 0.37177 | 0.292 | 1 |
| O15 | 0.14314 | 0.55093 | 0.01619 | 1 |
| O16 | 0.14836 | 0.97735 | 0.02361 | 1 |
| O17 | 0.30893 | 0.01325 | 0.216 | 1 |
| O18 | 0.38438 | -0.00619 | 0.59428 | 1 |
| O19 | 0.32705 | 0.39694 | 0.36781 | 1 |
| O20 | 0.18567 | 0.59801 | 0.30687 | 1 |
| O21 | 0.45095 | 0.88902 | 0.71719 | 1 |
| O22 | 0.19062 | 0.5137 | 0.62838 | 1 |
| O23 | 1 | 0.56419 | 0.5 | 1 |

**Table 3**

| T atoms | Coordination Sequence | | | | | | | | | |
|---|---|---|---|---|---|---|---|---|---|---|
| T1 | 4 | 10 | 21 | 43 | 67 | 100 | 134 | 169 | 210 | 263 |
| T2 | 4 | 12 | 31 | 48 | 63 | 84 | 118 | 164 | 220 | 275 |
| T3 | 4 | 10 | 21 | 40 | 66 | 96 | 135 | 167 | 205 | 257 |
| T4 | 4 | 11 | 25 | 41 | 67 | 96 | 124 | 160 | 215 | 271 |
| T5 | 4 | 12 | 28 | 43 | 64 | 87 | 116 | 165 | 213 | 274 |
| T6 | 4 | 11 | 24 | 40 | 65 | 96 | 123 | 161 | 210 | 268 |
| T7 | 4 | 12 | 29 | 46 | 58 | 93 | 121 | 161 | 224 | 280 |
| T8 | 4 | 12 | 24 | 39 | 67 | 93 | 123 | 161 | 208 | 266 |
| T9 | 4 | 12 | 25 | 40 | 68 | 95 | 124 | 162 | 212 | 273 |
| T10 | 3 | 8 | 19 | 38 | 64 | 99 | 141 | 175 | 212 | 240 |
| T11 | 4 | 12 | 30 | 48 | 60 | 82 | 118 | 161 | 207 | 278 |
| T12 | 4 | 12 | 32 | 48 | 68 | 84 | 120 | 179 | 221 | 282 |

### Example 2

22.1 g of deionized water, 245.2 g of 2,2-dimethyl-1,3-dihydroisoindolium hydroxide solution (containing 33 wt% of OSDA of 2,2-dimethyl-1,3-dihydroisoindolium hydroxide), 75.11 g of silica sol (containing 40 wt% of SiO₂) and 4.393 g of aluminum hydroxide were mixed uniformly and stirred at the room temperature for 5 h to obtain a mixture. The final material ratio (molar ratio) was: Al₂O₃/SiO₂=0.05, OSDA/SiO₂=0.5, H₂O/SiO₂=30.

The mixture prepared above was loaded into a stainless steel autoclave and crystallized at 150°C under rotation at 30 rpm for 4 days. After crystallization, the product was centrifuged, washed to a nearly neutral pH (pH=7-8), and dried in an oven at 110°C to obtain a precursor.

The precursor prepared above was subjected to a silylation treatment: 10 g of the precursor, 500 mL of 2 mol/L nitric acid solution and 3 g of dimethylethoxysilane were mixed and stirred at the room temperature for 0.5 h. The mixed solution was hydrothermally treated at 160°C for 28 h, and finally calcined at 550°C in an oxygen-containing atmosphere for 5 h to obtain 18.0 g of a sample.

The XRD pattern of the sample was shown in Figure 6 and Table 4. The sample was a SCM-53 molecular sieve, with a yield of 60 wt%.

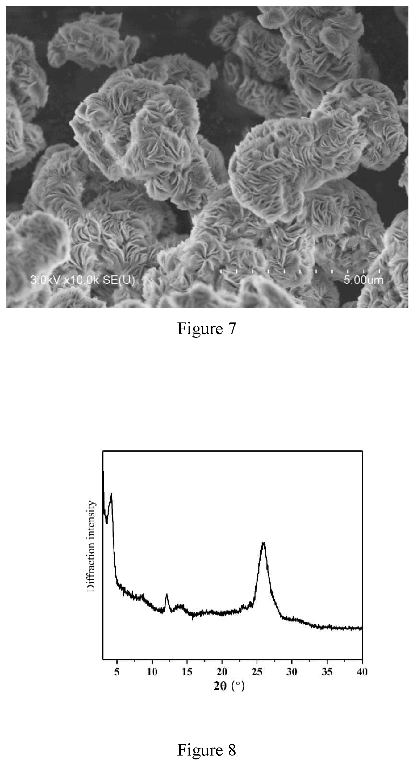

The SEM image of the sample was shown in Figure 7, presenting a nanosheet morphology.

**Table 4**

| 2θ | d-spacing (Å) | Relative Intensity (I/I₀×100) |
|---|---|---|
| 4.225° | 21.101 | 100 |
| 8.947° | 9.876 | 49.2 |
| 11.880° | 7.443 | 49.9 |
| 14.490° | 6.108 | 41.6 |
| 18.203° | 4.870 | 32.0 |
| 22.828° | 3.961 | 31.0 |
| 26.007° | 3.423 | 98.3 |

The resulting sample had a specific surface area of 308 m²/g and a total pore volume of 0.22 cm³/g.

The silicon to aluminum molar ratio of of the sample measured by the inductively coupled plasma atomic emission spectrometry (ICP) was 43.21 SiO₂•Al₂O₃.

### Example 3

12.9 g of deionized water, 145.5 g of 2,2-dimethyl-1,3-dihydroisoindolium hydroxide solution (containing 17 wt% of OSDA of 2,2-dimethyl-1,3-dihydroisoindolium hydroxide), 75.11 g of silica sol (containing 40 wt% of SiO₂) and 3.516 g of aluminum hydroxide were mixed uniformly and stirred at the room temperature for 4 h to obtain a mixture. The final material ratio (molar ratio) was: Al₂O₃/SiO₂=0.02, OSDA/SiO₂=0.3, H₂O/SiO₂=20.

The mixture prepared above was loaded into a stainless steel autoclave and crystallized at 170°C under rotation at 30 rpm for 3 days. After crystallization, the product was centrifuged, washed to a nearly neutral pH (pH=7-8), and dried in an oven at 110°C to obtain a precursor.

The precursor prepared above was subjected to a silylation treatment: 10 g of the precursor, 500 mL of 2 mol/L nitric acid solution and 3.375 g of dimethylethoxysilane were mixed and stirred at the room temperature for 0.5 h. The mixed solution was hydrothermally treated at 150°C for 24 h, and finally calcined at 550°C in an oxygen-containing atmosphere for 5 h to obtain 17.4 g of a sample.

The XRD pattern of the sample was shown in Table 5. The sample was a SCM-53 molecular sieve, with a yield of 58 wt%.

The SEM image of the sample was similar to Figure 4, presenting a nanosheet morphology.

**Table 5**

| 2θ | d-spacing (Å) | Relative Intensity (I/I₀×100) |
|---|---|---|
| 4.343° | 20.330 | 100 |
| 8.974° | 9.846 | 45.9 |
| 12.334° | 7.171 | 42.3 |
| 14.471° | 6.116 | 32.0 |
| 18.140° | 4.888 | 31.0 |
| 22.820° | 3.894 | 31.2 |
| 26.177° | 3.402 | 98.6 |

The resulting sample had a specific surface area of 328 m²/g and a total pore volume of 0.25 cm³/g.

The silicon to aluminum molar ratio of of the sample measured by the inductively coupled plasma atomic emission spectrometry (ICP) was 75.01 SiO₂•Al₂O₃.

### Example 4

16.8 g of deionized water, 15.00 g of 2,2-dimethyl-1,3-dihydroisoindolium hydroxide solution (containing 17 wt% of OSDA of 2,2-dimethyl-1,3-dihydroisoindolium hydroxide), 15.02 g of silica sol (containing 40 wt% of SiO₂) and 0.352 g of aluminum hydroxide were mixed uniformly and stirred at the room temperature for 6 h to obtain a mixture. The final material ratio (molar ratio) was: Al₂O₃/SiO₂=0.01, OSDA/SiO₂=0.4, H₂O/SiO₂=30.

The mixture prepared above was loaded into a stainless steel autoclave and crystallized at 140°C under rotation at 30 rpm for 5 days. After crystallization, the product was centrifuged, washed to a nearly neutral pH (pH=7-8), and dried in an oven at 110°C to obtain a precursor.

The precursor prepared above was subjected to a silylation treatment: 10 g of the precursor, 400 mL of 2.5 mol/L nitric acid solution and 2.275 g of dimethylethoxysilane were mixed and stirred at the room temperature for 0.5 h. The mixed solution was hydrothermally treated at 190°C for 5 h, and finally calcined at 600°C in an oxygen-containing atmosphere for 6 h to obtain 3.2 g of a sample.

The XRD pattern of the sample was shown in Table 6. The sample was a SCM-53 molecular sieve, with a yield of 54 wt%.

The SEM image of the sample was similar to Figure 4, presenting a nanosheet morphology.

**Table 6**

| 2θ | d-spacing (Å) | Relative Intensity (I/I₀×100) |
|---|---|---|
| 4.394° | 20.095 | 100 |
| 9.025° | 9.790 | 50.2 |
| 12.181° | 7.260 | 45.4 |
| 14.471° | 6.116 | 34.2 |
| 18.140° | 4.888 | 30.0 |
| 22.820° | 3.894 | 31.3 |
| 26.177° | 3.402 | 98.6 |

The resulting sample had a specific surface area of 288 m²/g and a total pore volume of 0.21 cm³/g.

The silicon to aluminum molar ratio of of the sample measured by the inductively coupled plasma atomic emission spectrometry (ICP) was 105.21 SiO₂•Al₂O₃.

### Example 5

5.1 g of deionized water, 58.196 g of 2,2-dimethyl-1,3-dihydroisoindolium hydroxide solution (containing 17 wt% of OSDA of 2,2-dimethyl-1,3-dihydroisoindolium hydroxide), 30.045 g of silica sol (containing 40 wt% of SiO₂) and 1.5 g of aluminum nitrate were mixed uniformly and stirred at the room temperature for 10 h to obtain a mixture. The final material ratio (molar ratio) was: Al₂O₃/SiO₂=0.01, OSDA/SiO₂=0.3, H₂O/SiO₂=20.

The mixture prepared above was loaded into a stainless steel autoclave and crystallized at 160°C under rotation at 30 rpm for 3 days. After crystallization, the product was centrifuged, washed to a nearly neutral pH (pH=7-8), and dried in an oven at 110°C to obtain a precursor.

The precursor prepared above was subjected to a silylation treatment: 10 g of the precursor, 400 mL of 2 mol/L nitric acid solution and 3 g of dimethylethoxysilane were mixed and stirred at the room temperature for 0.5 h. The mixed solution was hydrothermally treated at 170°C for 24 h, and finally calcined at 550°C in an oxygen-containing atmosphere for 6 h to obtain 8.4 g of a sample.

The XRD pattern of the sample was shown in Table 7. The sample was a SCM-53 molecular sieve, with a yield of 70 wt%.

The SEM image of the sample was similar to Figure 4, presenting a nanosheet morphology.

**Table 7**

| 2θ | d-spacing (Å) | Relative Intensity (I/I₀×100) |
|---|---|---|
| 4.343° | 20.330 | 100 |
| 8.923° | 9.902 | 39.7 |
| 12.079° | 7.321 | 40.8 |
| 14.420° | 6.137 | 30.4 |
| 18.136° | 4.888 | 27.0 |
| 22.818° | 3.894 | 27.0 |
| 26.126° | 3.408 | 91.2 |

The resulting sample had a specific surface area of 301 m²/g and a total pore volume of 0.22 cm³/g.

The silicon to aluminum molar ratio of of the sample measured by the inductively coupled plasma atomic emission spectrometry (ICP) was 101.89 SiO₂•Al₂O₃.

### Example 6

35.17 g of deionized water, 58.196 g of 2,2-dimethyl-1,3-dihydroisoindolium hydroxide solution (containing 17 wt% of OSDA of 2,2-dimethyl-1,3-dihydroisoindolium hydroxide), 41.67 g of tetraethyl orthosilicate (containing 28.8 wt% of SiO₂) and 0.409 g of aluminum isopropoxide were mixed uniformly and stirred at the room temperature for 10 h to obtain a mixture. The final material ratio (molar ratio) was: Al₂O₃/SiO₂=0.01, OSDA/SiO₂=0.3, H₂O/SiO₂=20.

The mixture prepared above was loaded into a stainless steel autoclave and crystallized at 160°C under rotation at 30 rpm for 3 days. After crystallization, the product was centrifuged, washed to a nearly neutral pH (pH=7-8), and dried in an oven at 110°C to obtain a precursor.

The precursor prepared above was subjected to a silylation treatment: 10 g of the precursor, 400 mL of 2 mol/L nitric acid solution and 3 g of dimethylethoxysilane were mixed and stirred at the room temperature for 0.5 h. The mixed solution was hydrothermally treated at 170°C for 24 h, and finally calcined at 550°C in an oxygen-containing atmosphere for 6 h to obtain 8.64 g of a sample.

The XRD pattern of the sample was shown in Table 8. The sample was a SCM-53 molecular sieve, with a yield of 72 wt%.

The SEM image of the sample was similar to Figure 4, presenting a nanosheet morphology.

**Table 8**

| 2θ | d-spacing (Å) | Relative Intensity (I/I₀×100) |
|---|---|---|
| 4.241° | 20.818 | 100 |
| 8.822° | 10.016 | 41.3 |
| 12.028° | 7.352 | 42.0 |
| 14.318° | 6.181 | 33.4 |
| 18.136° | 4.888 | 28.0 |
| 22.869° | 3.886 | 27.5 |
| 26.024° | 3.421 | 94.1 |

The resulting sample had a specific surface area of 288 m²/g and a total pore volume of 0.20 cm³/g.

The silicon to aluminum molar ratio of of the sample measured by the inductively coupled plasma atomic emission spectrometry (ICP) was 103.8 SiO₂•Al₂O₃.

2,2,6,6-Tetramethyl-1,2,3,5,6,7-hexahydropyrrolo[3,4-*f*]isoindolium hydroxide in the present invention was prepared by the following method:

### Preparation Example 1': preparation of

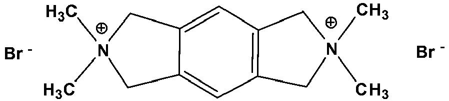

0.01 mol (98 wt%, 4.59 g) of 1,2,4,5-tetrakis(bromomethyl)benzene (CAS: 15442-91-8) and 300 mL of N,N-dimethylformamide (DMF) were mixed, and 0.02 mol (98 wt%, 4.59 g) of anhydrous potassium carbonate was added as an acid-binding agent, followed by uniform stirring at 1000-1500 rpm. Under a reflux device, the temperature was raised to 60-65°C with stirring, and 0.02 mol (10 mL) of dimethylamine (tetrahydrofuran solution of dimethylamine, 2 M) was added dropwise to the system at a constant pressure. The dropping rate was controlled to be 3-4 seconds per drop. After the completion of the dropwise addition, the reflux was continued for 6-8 hours, and the mixture was left to stand to the room temperature to obtain a reaction mixture. The reaction mixture was cooled at 0°C, then separated by filtration, and the filtrate was distilled under a reduced pressure. The concentrated liquid was recrystallized using acetone, filtered, and dried to obtain the target product of the nitrogen-containing heterocyclic quaternary ammonium salt, 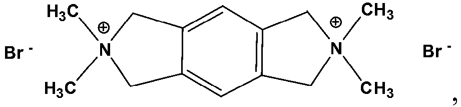 with a yield of 67.7%.

### Preparation Example 2': preparation of

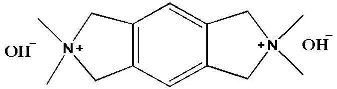

0.1 mol of the nitrogen-containing heterocyclic quaternary ammonium salt obtained in Preparation Example 1', 125 g of water and 200 g of anionic resin were stirred at the room temperature for 12 h, and filtered to obtain a solution of 2,2,6,6-tetramethyl-1,2,3,5,6,7-hexahydropyrrolo[3,4-*f*]isoindolium hydroxide ( 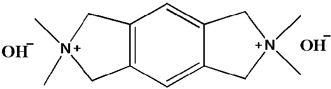 ).

### Example 1'

34.892 g of deionized water, 20.16 g of 2,2,6,6-tetramethyl-1,2,3,5,6,7-hexahydropyrrolo[3,4-*f*]isoindolium hydroxide solution (containing 20 wt% of OSDA of 2,2,6,6-tetramethyl-1,2,3,5,6,7-hexahydropyrrolo[3,4-*f*]isoindolium hydroxide), 30.045 g of silica sol (containing 40 wt% of SiO₂) and 7.0317 g of aluminum hydroxide were mixed uniformly and stirred at the room temperature for 8 h to obtain a mixture. The final material ratio (molar ratio) was: Al₂O₃/SiO₂=0.2, OSDA/SiO₂=0.08, H₂O/SiO₂=20.

The mixture prepared above was loaded into a stainless steel autoclave and crystallized at 150°C under rotation at 30 rpm for 7 days. After crystallization, the product was centrifuged, washed to a nearly neutral pH (pH=7-8), and dried in an oven at 100°C to obtain a precursor.

The precursor prepared above was subjected to a silylation treatment: 10 g of the precursor, 500 mL of 2 mol/L nitric acid solution and 6 g of tetramethoxysilane were mixed and stirred at the room temperature for 1 h. The mixed solution was hydrothermally treated at 170°C for 24 h, and finally calcined at 550°C in an oxygen-containing atmosphere for 6 h to obtain 5.3 g of a sample.

The XRD pattern of the sample was shown in Figure 8 and Table 1'. The sample was a SCM-53 molecular sieve, with a yield of 53 wt%.

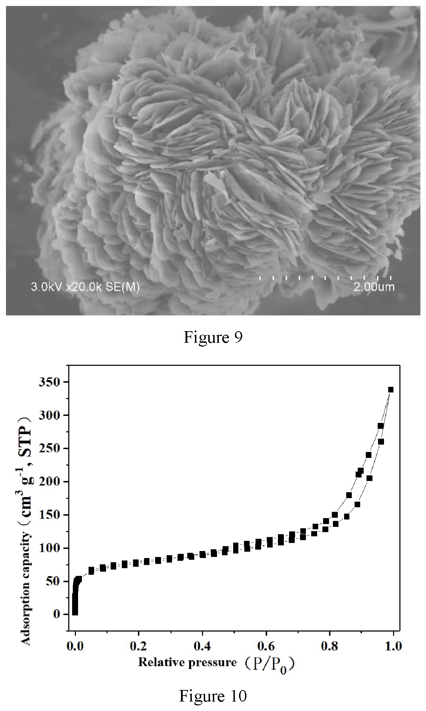

The SEM image of the sample was shown in Figure 9, presenting a nanosheet morphology.

The N₂ adsorption-desorption curve of the sample was shown in Figure 10, with a specific surface area of 350 m²/g and a total pore volume of 0.30 cm³/g.

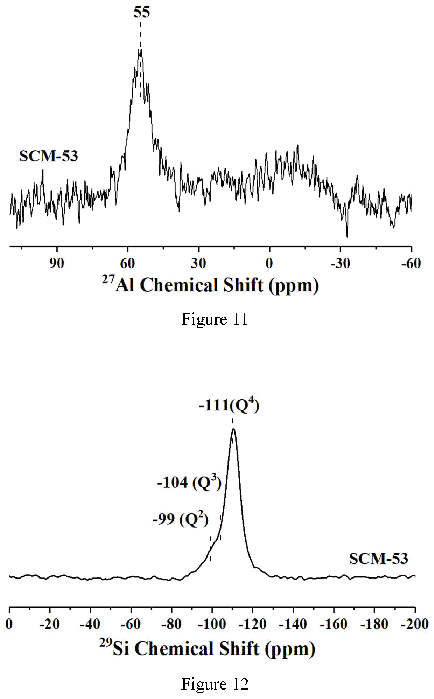

The ²⁷Al nuclear magnetic resonance spectrum of the sample was shown in Figure 11, and the ²⁹Si nuclear magnetic resonance spectrum was shown in Figure 12.

The silicon to aluminum molar ratio of the sample measured by the inductively coupled plasma atomic emission spectrometry (ICP) was 41.5 SiO₂•Al₂O₃.

**Table 1'**

| 2θ (°) | d-spacing (Å) | Relative Intensity (I/I₀×100) |
|---|---|---|
| 4.221 | 20.916 | 100.0 |
| 8.669 | 10.192 | 31.6 |
| 12.158 | 7.2738 | 32.7 |
| 14.164 | 6.2478 | 24.3 |
| 18.35 | 4.8308 | 20.6 |
| 22.946 | 4.1399 | 20.6 |
| 24.019 | 3.7019 | 26.6 |
| 25.982 | 3.4266 | 67.0 |

### Example 2'

56.780 g of deionized water, 37.8 g of 2,2,6,6-tetramethyl-1,2,3,5,6,7-hexahydropyrrolo[3,4-*f*]isoindolium hydroxide solution (containing 20 wt% of OSDA of 2,2,6,6-tetramethyl-1,2,3,5,6,7-hexahydropyrrolo[3,4-*f*]isoindolium hydroxide), 30.045 g of silica sol (containing 40 wt% of SiO₂) and 7.0317 g of aluminum hydroxide were mixed uniformly and stirred at the room temperature for 7 h to obtain a mixture. The final material ratio (molar ratio) was: Al₂O₃/SiO₂=0.2, OSDA/SiO₂=0.15, H₂O/SiO₂=30.

The mixture prepared above was loaded into a stainless steel autoclave and crystallized at 160°C under rotation at 35 rpm for 5 days. After crystallization, the product was centrifuged, washed to a nearly neutral pH (pH=7-8), and dried in an oven at 120°C to obtain a precursor.

The precursor prepared above was subjected to a silylation treatment: 10 g of the precursor, 500 mL of 2 mol/L nitric acid solution and 7.5 g of tetramethoxysilane were mixed and stirred at the room temperature for 1.0 h. The mixed solution was hydrothermally treated at 170°C for 24 h, and finally calcined at 550°C in an oxygen-containing atmosphere for 5 h to obtain 5.8 g of a sample.

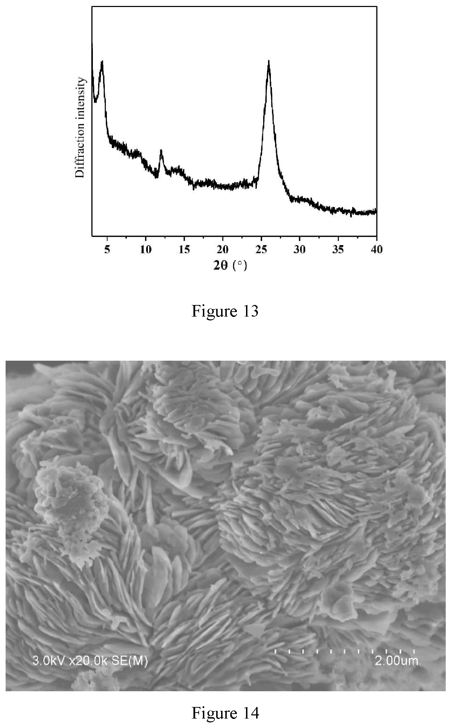

The XRD pattern of the sample was shown in Figure 13 and Table 2'. The sample was a SCM-53 molecular sieve, with a yield of 58 wt%.

The SEM image of the sample was shown in Figure 14, presenting a nanosheet morphology.

**Table 2'**

| 2θ (°) | d-spacing (Å) | Relative Intensity (I/I₀×100) |
|---|---|---|
| 4.353 | 20.284 | 100.0 |
| 8.890 | 9.939 | 48.7 |
| 12.032 | 7.350 | 50.0 |
| 14.388 | 6.151 | 39.2 |
| 18.184 | 4.875 | 30.1 |
| 22.983 | 3.866 | 32.4 |
| 24.047 | 3.694 | 34.2 |
| 26.037 | 3.419 | 98.7 |

The resulting sample had a specific surface area of 358 m²/g and a total pore volume of 0.31 cm³/g.

The silicon to aluminum molar ratio of of the sample measured by the inductively coupled plasma atomic emission spectrometry (ICP) was 36.5 SiO₂•Al₂O₃.

### Example 3'

62.540 g of deionized water, 75.6 g of 2,2,6,6-tetramethyl-1,2,3,5,6,7-hexahydropyrrolo[3,4-*f*]isoindolium hydroxide solution (containing 20 wt% of OSDA of 2,2,6,6-tetramethyl-1,2,3,5,6,7-hexahydropyrrolo[3,4-*f*]isoindolium hydroxide), 30.045 g of silica sol (containing 40 wt% of SiO₂) and 7.0317 g of aluminum hydroxide were mixed uniformly and stirred at the room temperature for 6 h to obtain a mixture. The final material ratio (molar ratio) was: Al₂O₃/SiO₂=0.2, OSDA/SiO₂=0.3, H₂O/SiO₂=40.

The mixture prepared above was loaded into a stainless steel autoclave and crystallized at 160°C under rotation at 35 rpm for 4 days. After crystallization, the product was centrifuged, washed to a nearly neutral pH (pH=7-8), and dried in an oven at 100°C to obtain a precursor.

The precursor prepared above was subjected to a silylation treatment: 10 g of the precursor, 500 mL of 2 mol/L nitric acid solution and 4.5 g of tetramethoxysilane were mixed and stirred at the room temperature for 1.0 h. The mixed solution was hydrothermally treated at 165°C for 24 h, and finally calcined at 550°C in an oxygen-containing atmosphere for 6 h to obtain 5.6 g of a sample.

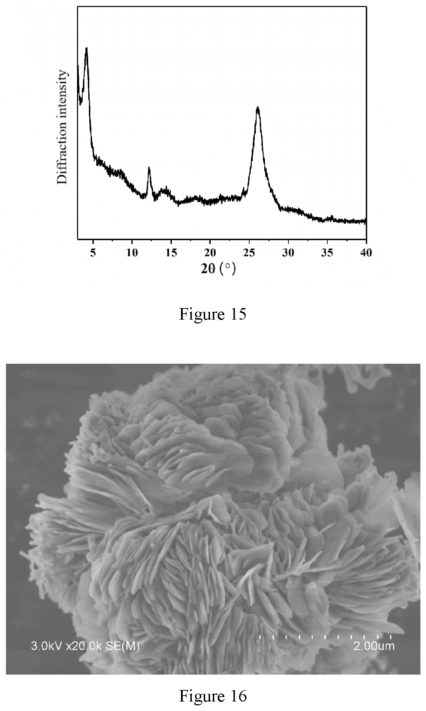

The XRD pattern of the sample was shown in Figure 15 and Table 3'. The sample was a SCM-53 molecular sieve, with a yield of 56 wt%.

The SEM image of the sample was shown in Figure 16, presenting a nanosheet morphology.

**Table 3'**

| 2θ (°) | d-spacing (Å) | Relative Intensity (I/I₀×100) |
|---|---|---|
| 4.178 | 21.131 | 100.0 |
| 8.628 | 10.240 | 36.3 |
| 12.250 | 7.219 | 36.9 |
| 14.213 | 6.226 | 25.9 |
| 18.140 | 4.886 | 21.7 |
| 22.939 | 3.874 | 21.7 |
| 24.292 | 3.661 | 25.3 |
| 26.124 | 3.419 | 70.0 |

The resulting sample had a specific surface area of 398 m²/g and a total pore volume of 0.32 cm³/g.

The silicon to aluminum molar ratio of of the sample measured by the inductively coupled plasma atomic emission spectrometry (ICP) was 38.9 SiO₂•Al₂O₃.

### Example 4'

36.368 g of deionized water, 20.16 g of 2,2,6,6-tetramethyl-1,2,3,5,6,7-hexahydropyrrolo[3,4-*f*]isoindolium hydroxide solution (containing 20 wt% of OSDA of 2,2,6,6-tetramethyl-1,2,3,5,6,7-hexahydropyrrolo[3,4-*f*]isoindolium hydroxide), 30.045 g of silica sol (containing 40 wt% of SiO₂) and 3.516 g of aluminum hydroxide were mixed uniformly and stirred at the room temperature for 7 h to obtain a mixture. The final material ratio (molar ratio) was: Al₂O₃/SiO₂=0.1, OSDA/SiO₂=0.08, H₂O/SiO₂=20.

The mixture prepared above was loaded into a stainless steel autoclave and crystallized at 130°C under rotation at 30 rpm for 9 days. After crystallization, the product was centrifuged, washed to a nearly neutral pH (pH=7-8), and dried in an oven at 110°C to obtain a precursor.

The precursor prepared above was subjected to a silylation treatment: 10 g of the precursor, 400 mL of 2.5 mol/L nitric acid solution and 6 g of tetramethoxysilane were mixed and stirred at the room temperature for 0.5 h. The mixed solution was hydrothermally treated at 170°C for 32 h, and finally calcined at 600°C in an oxygen-containing atmosphere for 6 h to obtain 6.0 g of a sample.

The XRD pattern of the sample was shown in Table 4'. The sample was a SCM-53 molecular sieve, with a yield of 60 wt%.

The SEM image of the sample was similar to Figure 9, presenting a nanosheet morphology.

**Table 4'**

| 2θ (°) | d-spacing (Å) | Relative Intensity (I/I₀×100) |
|---|---|---|
| 4.177 | 21.134 | 100.0 |
| 8.713 | 10.141 | 32.5 |
| 12.071 | 7.326 | 33.9 |
| 14.120 | 6.267 | 26.6 |
| 18.481 | 4.797 | 27.7 |
| 22.973 | 3.868 | 25.8 |
| 23.976 | 3.709 | 29.7 |
| 25.752 | 3.461 | 76.6 |

The resulting sample had a specific surface area of 378 m²/g and a total pore volume of 0.32 cm³/g.

The silicon to aluminum molar ratio of of the sample measured by the inductively coupled plasma atomic emission spectrometry (ICP) was 58.7 SiO₂•Al₂O₃.

### Example 5'

83.483 g of deionized water, 37.8 g of 2,2,6,6-tetramethyl-1,2,3,5,6,7-hexahydropyrrolo[3,4-*f*]isoindolium hydroxide solution (containing 20 wt% of OSDA of 2,2,6,6-tetramethyl-1,2,3,5,6,7-hexahydropyrrolo[3,4-*f*]isoindolium hydroxide), 41.667 g of tetraethyl orthosilicate (containing 28.8 wt% of SiO₂) and 3.516 g of aluminum hydroxide were mixed uniformly and stirred at the room temperature for 8 h to obtain a mixture. The final material ratio (molar ratio) was: Al₂O₃/SiO₂=0.1, OSDA/SiO₂=0.15, H₂O/SiO₂=30.

The mixture prepared above was loaded into a stainless steel autoclave and crystallized at 150°C under rotation at 30 rpm for 6 days. After crystallization, the product was centrifuged, washed to a nearly neutral pH (pH=7-8), and dried in an oven at 110°C to obtain a precursor.

The precursor prepared above was subjected to a silylation treatment: 10 g of the precursor, 400 mL of 2 mol/L nitric acid solution and 7.5 g of tetramethoxysilane were mixed and stirred at the room temperature for 0.5 h. The mixed solution was hydrothermally treated at 170°C for 24 h, and finally calcined at 550°C in an oxygen-containing atmosphere for 6 h to obtain 5.9 g of a sample.

The XRD pattern of the sample was shown in Table 5'. The sample was a SCM-53 molecular sieve, with a yield of 59 wt%.

The SEM image of the sample was similar to Figure 9, presenting a nanosheet morphology.

**Table 5'**

| 2θ (°) | d-spacing (Å) | Relative Intensity (I/I₀×100) |
|---|---|---|
| 4.091 | 21.582 | 100.0 |
| 8.716 | 10.137 | 34.9 |
| 12.206 | 7.245 | 36.0 |
| 14.126 | 6.265 | 25.4 |
| 18.227 | 4.863 | 22.0 |
| 22.765 | 3.903 | 21.6 |
| 24.379 | 3.668 | 23.9 |
| 26.124 | 3.408 | 65.4 |

The resulting sample had a specific surface area of 401 m²/g and a total pore volume of 0.34 cm³/g.

The silicon to aluminum molar ratio of of the sample measured by the inductively coupled plasma atomic emission spectrometry (ICP) was 61.1 SiO₂•Al₂O₃.

### Example 6'

50.426 g of deionized water, 75.6 g of 2,2,6,6-tetramethyl-1,2,3,5,6,7-hexahydropyrrolo[3,4-*f*]isoindolium hydroxide solution (containing 20 wt% of OSDA of 2,2,6,6-tetramethyl-1,2,3,5,6,7-hexahydropyrrolo[3,4-*f*]isoindolium hydroxide), 12.018 g of white carbon black (containing 100 wt% of SiO₂) and 2.734 g of alumina were mixed uniformly and stirred at the room temperature for 8 h to obtain a mixture. The final material ratio (molar ratio) was: Al₂O₃/SiO₂=0.1, OSDA/SiO₂=0.3, H₂O/SiO₂=40.

The mixture prepared above was loaded into a stainless steel autoclave and crystallized at 150°C under rotation at 35 rpm for 3 days. After crystallization, the product was centrifuged, washed to a nearly neutral pH (pH=7-8), and dried in an oven at 110°C to obtain a precursor.

The precursor prepared above was subjected to a silylation treatment: 10 g of the precursor, 400 mL of 2 mol/L nitric acid solution, and 4.75 g of tetramethoxysilane were mixed and stirred at the room temperature for 1.0 h. The mixed solution was hydrothermally treated at 170°C for 32 h, and finally calcined at 550°C in an oxygen-containing atmosphere for 6 h to obtain 5.8 g of a sample.

The XRD pattern of the sample was shown in Table 6'. The sample was a SCM-53 molecular sieve, with a yield of 59 wt%.

The SEM image of the sample was similar to Figure 9, presenting a nanosheet morphology.

**Table 6'**

| 2θ (°) | d-spacing (Å) | Relative Intensity (I/I₀×100) |
|---|---|---|
| 4.134 | 21.354 | 100.0 |
| 8.628 | 10.240 | 37.0 |
| 12.206 | 7.245 | 36.2 |
| 14.300 | 6.188 | 26.0 |
| 18.096 | 4.898 | 21.9 |
| 22.896 | 3.881 | 22.5 |
| 24.292 | 3.661 | 24.7 |
| 26.124 | 3.326 | 71.0 |

The resulting sample had a specific surface area of 389 m²/g and a total pore volume of 0.33 cm³/g.

The silicon to aluminum molar ratio of of the sample measured by the inductively coupled plasma atomic emission spectrometry (ICP) was 59.8 SiO₂•Al₂O₃.

### Comparative Example 1: (without adding a structure-directing agent)

The example differs from Example 1 in the absence of a structure-directing agent, and all other steps are identical to those in Example 1. The material charging steps are as follows:
35.17 g of deionized water, 75.11 g of silica sol (containing 40 wt% of SiO₂) and 1.758 g of aluminum hydroxide were mixed uniformly and stirred at the room temperature for 10 h to obtain a mixture. The final material ratio (molar ratio) was: Al₂O₃/SiO₂=0.02, H₂O/SiO₂=40.

The mixture prepared above was loaded into a stainless steel autoclave and crystallized at 160°C under rotation at 30 rpm for 3 days. After crystallization, the product was centrifuged, washed to a nearly neutral pH (pH=7-8), and dried in an oven at 110°C to obtain a precursor.

The precursor prepared above was subjected to a silylation treatment: 10 g of the precursor, 400 mL of 2 mol/L nitric acid solution and 3 g of dimethylethoxysilane were mixed and stirred at the room temperature for 0.5 h. The mixed solution was hydrothermally treated at 170°C for 24 h, and finally calcined at 550°C in an oxygen-containing atmosphere for 6 h to obtain 16.5 g of a sample.

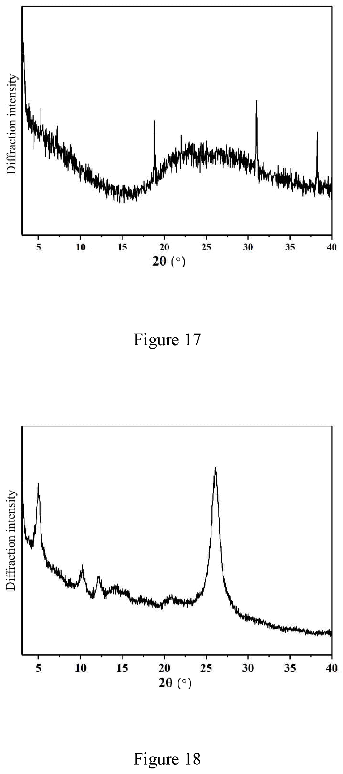

The XRD pattern of the sample was shown in Figure 17, demonstrating that the resulting sample is not the SCM-53 molecular sieve of the present invention.

### Comparative Example 2: (without performing the silanizing agent treatment)

The example differs from Example 1 in the absence of the silanizing agent treatment, and all other steps are identical to those in Example 1. The material charging steps are as follows:
35.17 g of deionized water, 155.1 g of 2,2-dimethyl-1,3-dihydroisoindolium hydroxide solution (containing 17 wt% of OSDA of 2,2-dimethyl-1,3-dihydroisoindolium hydroxide), 75.11 g of silica sol (containing 40 wt% of SiO₂) and 1.758 g of aluminum hydroxide were mixed uniformly and stirred at the room temperature for 10 h to obtain a mixture. The final material ratio (molar ratio) was: Al₂O₃/SiO₂=0.02, OSDA/SiO₂=0.32, H₂O/SiO₂=40.

The mixture prepared above was loaded into a stainless steel autoclave and crystallized at 160°C under rotation at 30 rpm for 3 days. After crystallization, the product was centrifuged, washed to a nearly neutral pH (pH=7-8), dried in an oven at 110°C to obtain a precursor, and finally calcined at 550°C in an oxygen-containing atmosphere for 6 h to obtain 16.5 g of a sample.

The XRD pattern of the sample was shown in Figure 18, demonstrating that the resulting sample is not the SCM-53 molecular sieve of the present invention.

The preferred embodiments of the present invention are described above in detail. However, the present invention is not limited thereto. Within the scope of the technical concept of the present invention, a variety of simple variations of the technical solutions of the present invention can be made, including combining various technical features in any other suitable manner. These simple variations and combinations should also be considered as the contents of the present invention and all fall within the scope of protection of the present invention.

## Claims

1. An aluminosilicate SCM-53 molecular sieve, **characterized in that** an X-ray diffraction pattern of the SCM-53 molecular sieve includes a diffraction peak at 2θ of 4.292°±0.40°, and optionally further includes one or more of diffraction peaks at 2θ of 8.805°±0.50°, 12.119°±0.40° and 26.036°±0.40°.

2. The SCM-53 molecular sieve according to claim 1, **characterized in that** the X-ray diffraction pattern of the SCM-53 molecular sieve further includes one or more of diffraction peaks at 2θ of 14.322°±0.50°, 18.385°±0.540° and 22.998°±0.40°.

3. The SCM-53 molecular sieve according to claim 1 or 2, **characterized in that**,
the intensity of the diffraction peak at 2θ of 4.292°±0.40° and/or 26.036°±0.40° is stronger than the intensity of the diffraction peak at 2θ of 8.805°±0.50° and/or 12.119°±0.40°; and/or
the intensity of the diffraction peak at 2θ of 4.292°±0.40° is stronger than the intensity of the diffraction peak at 2θ of 26.036°±0.40°, or the intensity of the diffraction peak at 2θ of 4.292°±0.40° is weaker than the intensity of the diffraction peak at 2θ of 26.036°±0.40°; and/or
the diffraction peak at 2θ of 4.292°±0.40° or 26.036°±0.40° is the strongest peak.

4. The SCM-53 molecular sieve according to any one of claims 1 to 3, **characterized in that** the X-ray diffraction pattern of the SCM-53 molecular sieve includes (i) a diffraction peak at 2θ of 4.363°±0.30°, optionally further including one or more of diffraction peaks at 2θ of 8.940°±0.30°, 12.08°±0.30° and 26.09°±0.30°, or (ii) a diffraction peak at 2θ of 4.221°±0.30°, optionally further including one or more of diffraction peaks at 2θ of 8.669°±0.30°, 12.158°±0.30° and 25.982°±0.30°.

5. The SCM-53 molecular sieve according to claim 4, **characterized in that** the X-ray diffraction pattern of the SCM-53 molecular sieve further includes, in the case of (i), one or more of diffraction peaks at 2θ of 14.48°±0.30°, 18.42°±0.50° and 23.05°±0.30°, or further includes, in the case of (ii), one or more of diffraction peaks at 2θ of 14.164°±0.30°, 18.35°±0.50°, 22.946°±0.30° and 24.019°±0.50°.

6. The SCM-53 molecular sieve according to claim 4, **characterized in that**,
the intensity of the diffraction peak at 2θ of 4.363°±0.30° and/or 26.09°±0.30° is stronger than the intensity of the diffraction peak at 2θ of 8.940°±0.30° and/or 12.08°±0.30°, or the intensity of the diffraction peak at 2θ of 4.221°±0.30° and/or 25.982°±0.30° is stronger than the intensity of the diffraction peak at 2θ of 8.669°±0.30° and/or 12.158°±0.30°; and/or
the intensity of the diffraction peak at 2θ of 4.363°±0.30° is stronger than the intensity of the diffraction peak at 2θ of 26.09°±0.30°, or the intensity of the diffraction peak at 2θ of 4.363°±0.30° is weaker than the intensity of the diffraction peak at 2θ of 26.09°±0.30°, or the intensity of the diffraction peak at 2θ of 4.221°±0.30° is stronger than the intensity of the diffraction peak at 2θ of 25.982°±0.30°, or the intensity of the diffraction peak at 2θ of 4.221°±0.30° is weaker than the intensity of the diffraction peak at 2θ of 25.982°±0.30°; and/or
the diffraction peak at 2θ of 4.363°±0.30° or 26.09°±0.30° is the strongest peak, or the diffraction peak at 2θ of 4.221°±0.30° or 25.982°±0.30° is the strongest peak.

7. The SCM-53 molecular sieve according to any one of claims 1 to 6, **characterized in that** the X-ray diffraction pattern of the SCM-53 molecular sieve includes the diffraction peaks shown in Table A or Table A':
**Table A**
| 2θ | Relative Intensity (I/I₀×100) |
|---|---|
| 4.363°±0.30° | s-vs |
| 8.940°±0.30° | m-s |
| 12.08°±0.30° | m-s |
| 26.09°±0.30° | vs |
**Table A'**
| 2θ | Relative Intensity (I/I₀×100) |
|---|---|
| 4.221°±0.30° | vs |
| 8.669°±0.30° | m-s |
| 12.158°±0.30° | m-s |
| 25.982°±0.30° | s-vs |
preferably, the X-ray diffraction pattern of the SCM-53 molecular sieve includes the diffraction peaks shown in Table B or Table B':
**Table B**
| 2θ | Relative Intensity (I/I₀×100) |
|---|---|
| 4.363°±0.30° | s-vs |
| 8.940°±0.30° | m-s |
| 12.08°±0.30° | m-s |
| 14.48°±0.30° | m-s |
| 18.42°±0.50° | w-m |
| 23.05°±0.30° | w-m |
| 26.09°±0.30° | vs |
**Table B'**
| 2θ | Relative Intensity (I/I₀×100) |
|---|---|
| 4.221°±0.30° | vs |
| 8.669°±0.30° | m-s |
| 12.158°±0.30° | m-s |
| 14.164°±0.30° | m-s |
| 18.35°±0.50° | w-m |
| 22.946°±0.30° | w-m |
| 24.019°±0.50° | m-s |
| 25.982°±0.30° | s-vs |

8. The SCM-53 molecular sieve according to any one of claims 1 to 7, **characterized in that** the X-ray diffraction pattern of the SCM-53 molecular sieve includes the diffraction peaks shown in Table C or Table C':
**Table C**
| 2θ | d-spacing (Å)^{(b)} | Relative Intensity (I/I₀×100) |
|---|---|---|
| 4.363°±0.30° | 20.237 | s-vs |
| 8.940°±0.30° | 9.884 | m-s |
| 12.08°±0.30° | 7.320 | m-s |
| 26.09°±0.30° | 3.413 | vs |
wherein b: varies with 2θ
**Table C'**
| 2θ | d-spacing (Å)^{(b)} | Relative Intensity (I/I₀×100) |
|---|---|---|
| 4.221°±0.30° | 20.916 | vs |
| 8.669°±0.30° | 10.192 | m-s |
| 12.158°±0.30° | 7.2738 | m-s |
| 25.982°±0.30° | 3.4266 | s-vs |
wherein b: varies with 2θ
preferably, the X-ray diffraction pattern of the SCM-53 molecular sieve includes the diffraction peaks shown in Table D or Table D':
**Table D**
| 2θ | d-spacing (Å)^{(b)} | Relative Intensity (I/I₀×100) |
|---|---|---|
| 4.363°±0.30° | 20.237 | s-vs |
| 8.940°±0.30° | 9.884 | m-s |
| 12.08°±0.30° | 7.320 | m-s |
| 14.48°±0.30° | 6.113 | m-s |
| 18.42°±0.50° | 4.813 | w-m |
| 23.05°±0.30° | 3.855 | w-m |
| 26.09°±0.30° | 3.413 | vs |
wherein b: varies with 2θ
**Table D'**
| 2θ | d-spacing (Å)^{(b)} | Relative Intensity (I/I₀×100) |
|---|---|---|
| 4.221°±0.30° | 20.916 | Vs |
| 8.669°±0.30° | 10.192 | m-s |
| 12.158°±0.30° | 7.2738 | m-s |
| 14.164°±0.30° | 6.2478 | m-s |
| 18.35°±0.50° | 4.8308 | w-m |
| 22.946°±0.30° | 4.1399 | w-m |
| 24.019°±0.50° | 3.7019 | m-s |
| 25.982°±0.30° | 3.4266 | s-vs |
wherein b: varies with 2θ.

9. The SCM-53 molecular sieve according to any one of claims 1 to 8, **characterized in that** the SCM-53 molecular sieve includes silicon, aluminum and oxygen; and/or
in the SCM-53 molecular sieve, the molar ratio of silica to alumina is 10-400, preferably 15-350;
more preferably, the SCM-53 molecular sieve has a chemical composition of mSiO₂·Al₂O₃ with a molar ratio where 10≤m≤400, preferably 15≤m≤350, more preferably 20≤m≤300; and/or
crystals of the SCM-53 molecular sieve have a nanosheet morphology, and the average thickness of the crystals is less than or equal to 19 nm, preferably 3 nm-18 nm, more preferably 5 nm-16 nm, or the average thickness of the crystals is less than or equal to 30 nm, preferably 2 nm-27 nm, more preferably 5 nm-25 nm;
preferably, in the SCM-53 molecular sieve, crystals with a thickness of less than or equal to 16 nm account for at least 70% of the total number of crystals; and/or
the specific surface area of the SCM-53 molecular sieve is 100 m²/g-500 m²/g, preferably 200 m²/g-400 m²/g or 300 m²/g-450 m²/g; and/or
the pore volume of the SCM-53 molecular sieve is 0.015 cm³/g-1.0 cm³/g, preferably 0.05 cm³/g-0.75 cm³/g; and/or
the SCM-53 molecular sieve is germanium-free.

10. The SCM-53 molecular sieve according to any one of claims 1 to 9, **characterized in that** the SCM-53 molecular sieve further includes one or more elements selected from sodium, potassium, germanium, titanium, boron, zirconium, tin and iron; and/or
the SCM-53 molecular sieve has a framework topological structure containing natural tillings of [4²▪5⁴▪10⁴], [5²▪6▪10²], [4▪5⁴▪6⁵▪7⁴] and [6▪7²]; and/or
the natural tillings of the framework topological structure of the SCM-53 molecular sieve has a compostion containing one [4²▪5⁴▪10⁴], two [5²▪6▪10²], two [4▪5⁴▪6⁵▪7⁴] and four [6▪7²]; and/or
the SCM-53 molecular sieve includes a two-dimensional 10×10-membered ring pore system; and/or
the SCM-53 molecular sieve has one or more of 4-membered ring, 5-membered ring, 6-membered ring, 7-membered ring and 10-membered ring; and/or
the SCM-53 molecular sieve belongs to a monoclinic crystal system;
preferably, the unit cell parameters of the monoclinic crystal system of the SCM-53 molecular sieve include a = 8.0 Å-11.5 Å, preferably a = 8.5 Å-11.0 Å, more preferably a = 9.0 Å-10.5 Å;
preferably, the unit cell parameters of the monoclinic crystal system of the SCM-53 molecular sieve include b = 8.0 Å-11.5 Å, preferably b = 8.5 Å-11.0 Å, more preferably b = 9.0 Å-11.0 Å;
preferably, the unit cell parameters of the monoclinic crystal system of the SCM-53 molecular sieve include c = 18.0 Å-22.0 Å, preferably c = 18.5 Å-21.5 Å, more preferably c = 19.0 Å-21.0 Å;
preferably, the unit cell parameters of the monoclinic crystal system of the SCM-53 molecular sieve include α = 90°, γ = 90°;
preferably, the unit cell parameter of the monoclinic crystal system of the SCM-53 molecular sieve is β = 100°-125°, preferably β = 105°-115°.

11. A method for preparing the SCM-53 molecular sieve according to any one of claims 1 to 10, comprising steps of:
S1: subjecting a mixture containing a silicon source, an aluminum source, an organic structure-directing agent and a solvent to a crystallization treatment to obtain a crystallized solid product;
S2: mixing the crystallized solid product with a silanizing agent under an acidic condition, and then subjecting the mixture to a hydrothermal treatment to obtain a hydrothermally treated solid product;
S3: drying and calcining the hydrothermally treated solid product.

12. The preparation method according to claim 11, **characterized in that** the silicon source calculated as SiO₂ and the aluminum source calculated as Al₂O₃ has a molar ratio of 1:(0.0025-0.25), preferably 1:(0.0025-0.2), more preferably 1:(0.0025-0.1) or 1:(0.05-0.2), preferably 1:(0.0025-0.08), more preferably 1:(0.005-0.05); and/or
the silicon source and the organic structure-directing agent has a molar ratio of 1:(0.10-0.50), preferably 1:(0.20-0.50), more preferably 1:(0.30-0.50); and/or
the silicon source and the solvent has a molar ratio of 1:(8-100), preferably 1:(15-100), more preferably 1:(15-50); and/or
the acidic condition is provided by an acid solution; preferably, the acid solution has a concentration of 0.5 mol/L-6 mol/L, preferably 1 mol/L-5 mol/L, more preferably 1.5 mol/L-4.5 mol/L, wherein the acid solution is preferably selected from aqueous or ethanol solutions of hydrochloric acid, acetic acid or nitric acid;
preferably, the acid solution and the crystallized product has a liquid-solid ratio of (10-100) mL:1 g, preferably (20-80) mL:1 g, more preferably (40-60) mL:1 g; and/or
the silanizing agent and the crystallized product has a mass ratio of (0.1-4):1, preferably (0.2-2.5):1, more preferably (0.2-2):1.

13. The preparation method according to any one of claims 11 and 12, **characterized in that** the organic structure-directing agent includes a compound represented by Formula I: 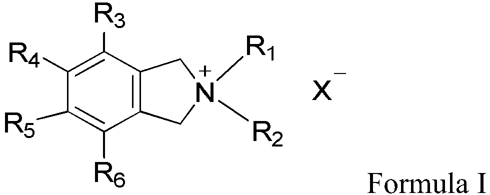
in Formula I, R₁ and R₂ are identical or different and each independently selected from C₁₋₈ alkyl, preferably C₁₋₄ alkyl, more preferably methyl, ethyl or propyl; X⁻ is selected from OH⁻, halogen anions, carbonate, nitrate or monovalent organic acid radicals; R₃, R₄, R₅ and R₆ are identical or different and each independently selected from hydrogen, halogen, C₁₋₄ alkyl, preferably hydrogen, fluorine, chlorine, bromine, methyl, ethyl or propyl;
preferably, the organic structure-directing agent of Formula I is selected from one or more of 2,2-dimethyl-1,3-dihydroisoindolium hydroxide, 2,2-dimethyl-1,3-dihydroisoindolium bromide and 2,2-dimethyl-1,3-dihydroisoindolium chloride; and/or
the organic structure-directing agent includes a compound represented by Formula I': 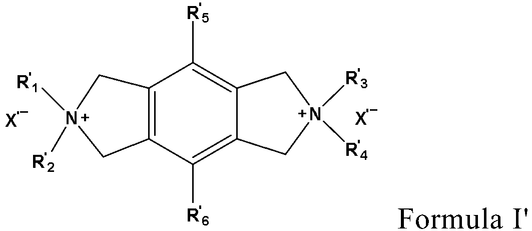
in Formula I', R'₁, R'₂, R'₃ and R'₄ are identical or different and each independently selected from C₁₋₈ alkyl, preferably C₁₋₄ alkyl, more preferably methyl, ethyl or propyl; X'⁻ is selected from OH⁻, halogen anions, carbonate, nitrate or monovalent organic acid radicals; R'₅ and R'₆ are identical or different and each independently selected from hydrogen, halogen, C₁₋₄ alkyl, preferably hydrogen, fluorine, chlorine, bromine, methyl, ethyl or propyl;
preferably, the organic structure-directing agent of Formula I' is selected from one or more of 2,2,6,6-tetramethyl-1,2,3,5,6,7-hexahydropyrrolo[3,4-*f*]isoindolium hydroxide, 2,2,6,6-tetramethyl-1,2,3,5,6,7-hexahydropyrrolo[3,4-*f*]isoindolium bromide and 2,2,6,6-tetramethyl-1,2,3,5,6,7-hexahydropyrrolo[3,4-*f*]isoindolium chloride.

14. The preparation method according to any one of claims 11 to 13, **characterized in that** the silanizing agent includes a compound represented by Formula II: 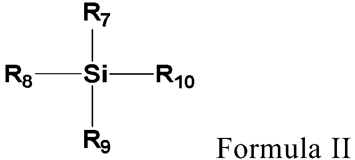 in Formula II, R₇, R₈, R₉ and R₁₀ are identical or different and each independently selected from hydrogen, halogen, C₁₋₆ alkyl, C₁₋₆ alkoxy, preferably hydrogen, fluorine, chlorine, bromine, methyl, ethyl, propyl, methoxy, ethoxy, propoxy; preferably, R₇, R₈, R₉ and R₁₀ are identical and all selected from C₁₋₄ alkoxy; preferably, the silanizing agent is selected from one or more of tetramethoxysilane, tetraethoxysilane, tetrapropoxysilane, tetraisopropoxysilane, monomethylchlorosilane, dimethylchlorosilane, monomethylmethoxysilane, dimethylmethoxysilane, monomethylethoxysilane and dimethylethoxysilane.

15. The preparation method according to any one of claims 11 to 14, **characterized in that** the crystallization treatment of the mixture is a dynamic crystallization with rotation or stirring, with a rotation speed of 10 rpm-60 rpm and a stirring speed of 30 rpm-400 rpm; crystallization conditions of the mixture are crystallization at 130°C-180°C for 1-12 days, preferably at 135°C-175°C for 2-11 days, more preferably at 140°C-170°C for 3-10 days; and/or
the temperature of the hydrothermal treatment is 80°C-190°C; and/or
the time of the hydrothermal treatment is 5 h-48 h; and/or
the calcination temperature is 400°C-800°C, preferably 500°C-700°C; and/or
the calcination time is 2 h-10 h, preferably 3 h-9 h; and/or
the silicon source is selected from one or more of silica sol, silica gel, tetraethyl orthosilicate, white carbon black and silicic acid; and/or
the aluminum source is selected from one or more of aluminum hydroxide, aluminum isopropoxide, aluminum nitrate and aluminum oxide; and/or
the solvent is selected from water; and/or
the mixture contains no alkali metal or alkaline earth metal.

16. A molecular sieve composition comprising the SCM-53 molecular sieve according to any one of claims 1 to 10 or the SCM-53 molecular sieve prepared by the preparation method according to any one of claims 11 to 15, and optionally a binder.

17. Use of the SCM-53 molecular sieve according to any one of claims 1 to 10 or the SCM-53 molecular sieve prepared by the preparation method according to any one of claims 11 to 15 or the molecular sieve composition according to claim 16 in an adsorption separation, an ion exchange or a catalytic conversion of organic compounds.
